# EUROPEAN PATENT APPLICATION

(11) **EP 4 715 507 A1**
(43) Date of publication of application: **25.03.2026**
(21) Application number: 25198682.4
(22) Date of filing: 28.08.2025
(51) Int. Cl.: G05B 23/02

(54) **INDUSTRIAL ASSET BASELINE MONITORING SYSTEMS AND METHODS**

(30) Priority: 19.09.2024 US 202418890132
(71) Applicant: Rockwell Automation Technologies, Inc., Mayfield Heights, OH 44124 (US)
(72) Inventor: Mazur, David C., Mayfield Heights, OH, 44124 (US); Sandler, Nathaniel S., Mayfield Heights, OH, 44124 (US); Mills, Jonathan A., Mayfield Heights, OH, 44124 (US); Resseguie, Richard, Mayfield Heights, OH, 44124 (US); Seibel, Brian J., Mayfield Heights, OH, 44124 (US); Mourzine, Eugene, Mayfield Heights, OH, 44124 (US); Methfessel, Jakob, Mayfield Heights, OH, 44124 (US); Hughes, Lisa D., Mayfield Heights, OH, 44124 (US); Sneen, Kurt D., Mayfield Heights, OH, 44124 (US); Ozimek, Patrick E., Mayfield Heights, OH, 44124 (US)
(74) Representative: Grünecker Patent- und Rechtsanwälte PartG mbB

(57) **Abstract**

Systems and methods described herein may improve machine learning operations capable of being applied to many systems, like continuous processes and/or motion devices, without use of a process state identification data from a control system. By identifying process state based on acquired data, such as sensed data, configuration data, and/or motion profiles, or the like, a control system may determine which process state an asset is operated within and select from one or more device models corresponding to that process state to obtain an indication of expected asset operation developed earlier based on in situ training operations. When the control system is disposed within the asset, this analysis may be performed within the "four walls" of the asset, enabling relatively robust analytics to occur locally at the asset as opposed to transmitting the sensing data up into a cloud or the like for analysis.

## Description

### BACKGROUND

The present disclosure generally relates to control systems and methods, and more particularly, to control systems that identify operational anomalies based on device data associated with an operational technology (OT) network that includes one or more industrial automation systems.

Industrial automation systems are managed and operated using automation control and monitoring systems (e.g., industrial control systems), particularly in industrial automation environments. Such applications may include controlling a wide range of components, such as valves, electric motors, and so forth, and the collection of data via sensors. Typical industrial control systems may include one or more components, such as programming terminals, automation controllers, input/output (IO) modules, communication networks, human-machine interface (HMI) terminals, and the like.

Some signature analysis and operational deviation detection methods use machine learning device model generation operations that use data gathered over a relatively long time period, on the order of weeks or months. Gathering data over these relatively long time periods may be disruptive to a process and expensive (e.g., time, costs). Moreover, signature analysis and operational deviation detection methods may use a control system or other external data source to define process states of the asset corresponding to the device model by indicating via a control signal when the asset has switched loads or into a different operational state. The process state of the asset may play a role with the ability to detect operational deviations since different signatures would be identifiable among the various process states. Systems and methods for training and process state identification that reduce time and/or costs associated with baseline training and/or that operate to identify a process state without a control system may be desired.

This section is intended to introduce the reader to aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, a system may include an industrial control system and an industrial asset communicatively coupled to the industrial control system via a local control system. The industrial asset may include the local control system. The local control system may operate to receive, from the industrial control system, first data corresponding to an operation of the industrial asset to occur between a first time and a second time. The first data may correspond to a device configuration or a motion profile set to be applied to control operation of the industrial asset between the first time and the second time. The local control system may receive, from one or more sensors, second data acquired between the first time and the second time. The local control system may determine that the industrial asset is operating in a steady state and/or was operating in steady state while the second data was acquired based on the second data. The local control system may determine a process state from a plurality of process states based on the first data. The local control system may access, from memory of the industrial asset, a baselined device model of multiple device models based on the process state and the second data. The baselined device model may indicate an expected operation of the industrial asset while operated in the process state at an operational parameter corresponding to the second data. The baselined device model may have been trained at an earlier time. In response to the industrial asset operating in the steady state, determine a difference between the expected operation and a current operation, wherein the current operation is indicated based on the first data, the second data, or any combination thereof. The local control system generate one or more control signals based on the difference.

In another embodiment, a method may involve receiving, via a local control system of an industrial asset from an industrial control system that communicates with the local control system to control the industrial asset, first data corresponding to an operation to operate the industrial asset according to at a first time. The method may involve receiving, via the local control system from a first sensor of the industrial asset, second data acquired at the first time. The method may involve determining, via the local control system, that the industrial asset is operating in a steady state based on the second data. The method may involve, in response to determining that the industrial asset is operating in steady state based on the second data, determining, via the local control system, a process state from multiple process states based on the first data. The method may involve reading, via the local control system from memory, a baselined device model of a plurality of device models based on the process state and the second data, where the baselined device model may indicate an expected operation of the industrial asset while the local control system operates the industrial asset in the process state at the second data. The method may involve determining, via the local control system, a difference between the expected operation and a current operation, where the current operation may be indicated by at least some of the first data, the second data, third data acquired by a second sensor, or any combination thereof. The method may involve generating, via the local control system, one or more control signals based on the difference.

In a yet another embodiment, a non-transitory, tangible, computer-readable medium storing instructions that, when executed by processing circuitry, cause a local control system of an industrial asset to perform operations. The operations may include receiving first data from an industrial control system corresponding to an operation of the industrial asset according at a first time. The operations may include receiving second data from a first sensor of the industrial asset, where the second data was acquired by the first sensor at the first time. The operations may include determining, via the local control system, that the industrial asset is not operating in a steady state based on the second data, that the industrial asset is operating in a commissioning mode, or both. The operations may include, in response to determining that the industrial asset is not operating in steady state or is operating in a commissioning mode, generating one or more control signals to operate the industrial asset without accessing a device model.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 is a perspective view of an example industrial automation system, in accordance with an embodiment;
FIG. 2 is a block diagram of an example industrial control system, in accordance with an embodiment;
FIG. 3 is a block diagram of an example operational technology (OT) network, a first computing system (e.g., on-premise computing system), and a second computing system (e.g., off-premise computing system), one or more of which may coordinate with a container orchestration system, in accordance with an embodiment;
FIG. 4 is a diagrammatic representation of deployed container pods to various hierarchical levels of the industrial automation systems of FIG. 1, in accordance with an embodiment;
FIG. 5 is a diagrammatic representation of a container-based model predictive control (MPC) system deployed in one or more of the systems of FIG. 3, in accordance with an embodiment;
FIG. 6 is a flow chart of a method that the container-based MPC system of FIG. 5 may perform when detecting an event, in accordance with an embodiment;
FIG. 7 is a diagrammatic representation of training operations performed by the container-based MPC system of FIG. 5 to train a device model of an OT device of FIG. 3 based on one or more loads and one or more operational parameters, in accordance with an embodiment;
FIG. 8 is a flow chart of a method that the container-based MPC system of FIG. 5 may perform as part of the training operations of FIG. 7 and/or detection operations, in accordance with an embodiment;
FIG. 9 is a flow chart of a method that the container-based MPC system of FIG. 5 may perform when applying the operations of FIG. 8 to an OT device of FIG. 3 with continuous operations between process states (e.g., pump, blower, fan), in accordance with an embodiment;
FIG. 10 is a flow chart of a method used to operate the industrial control system of FIG. 1 based on one or more operational statuses of one or more OT devices, in accordance with an embodiment;
FIG. 11 is a flow chart of a method used to operate a local control system of an OT device of FIG. 3 based on the OT device being in a commissioning mode, in accordance with an embodiment; and
FIG. 12 is a flow chart of a method used to operate a local control system of an OT device of FIG. 3 to perform a throughput analysis of operation of the OT device to determine an operational set point at which to operate the OT device, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Embodiments of the present disclosure are generally directed toward industrial automation systems that implement improved machine learning operations. By using systems and methods described herein, training time to identify a baseline operation of the asset may reduce, be less disruptive to the process, be more accurate in its prediction ability, among other improvements. Furthermore, systems and methods described herein may determine which process state of multiple process states an industrial asset or is operated in without receiving the indication of the process state from a control system. The systems and methods described herein may use acquired data to identify a process state of the asset based on the actual operation of the asset. This may be done without receiving process state identification data from a control system. Doing so without process state identification data may enable these systems and methods to be applied to continuous processing and discrete/batch processing, as well as other processes, like motion device systems.

A process state may be associated with a device model. The device model may be either identified as a training device model or a baselined device model. While a training device model, data acquired relative to an asset being operated in the process state may be used to adjust indications of expected operation identified via the device model. While a baselined device model, data acquired relative to the asset being operated in the process state may be compared to an indication of expected operation identified via the device model. Any suitable data or relationships may be used to indicate the expected operation of the asset while in that process state. These device model systems and methods may enable in situ model training based on real-time operations of the asset without causing disruption to an existing manufacturing or distribution process to obtain training data sets, as the device model may be trained on real data received during actual (as opposed to dedicated isolated training or provisioning) operations.

A respective asset may operate in multiple process states. For example, a robotic arm may have several different motion profiles that may change based on a load, where respective motion profiles may be differentiated from each other based on an operational parameter from which to discern operation of the asset as in a respective process state. For example, for a particular load, the robotic arm may be operated in a first process state when at a first speed but operated in a second process state when at a second speed. As such, a hierarchical index stored in memory may include references to the multiple process states stored relative to the respective asset and the corresponding differentiating operational parameter. For example, the hierarchical index and the various indications of process states, device models, and operational parameters may be stored in memory accessible by a local control system of the asset. The various indications of device models may be stored with an indication of whether it is trained or in baseline so that the local control system can process data acquired while in that process state accordingly to train the indicated expected operation based on the acquired data or to compare to the indicated expected operation based on the acquired data.

Training and classification operations may similarly access a same hierarchical index for the asset, which may enable a mix of trained device models and baselined device models. By enabling overlapping training and baseline operations across each process state of an asset, these systems and methods described herein may enable more readily implemented machine learning program that enables the more frequent types of loads and operations to be trained faster and less frequent types of process states and operational parameters (e.g., speeds) to be trained slower. Furthermore, these overlapping training and baseline operations across each process state enable in situ device model training based on data received about the actual manufacturing process as opposed to using dedicated training processes during commissioning, yielding a far less disruptive training deployment in an industrial system, as will be appreciated herein.

To elaborate further, acquired data may be used to identify a process state of the asset based on the actual operation of the asset. The acquired data may correspond to a signature of a device while operated in an operational mode and, overtime, that acquired data may be used to build a model representative of a baseline, or normal, operation for that device while in that operational mode. For pumps and motors, the acquired data may indicate a mechanical loading. For motion devices, the acquired data may include a position command, a motor or load inertia, torque, current, digital IO commands and/or analog commands (or a combination of the commands), position control mode parameters, velocity control mode parameters, torque control mode parameters, tuning parameters, notch filter parameters, acceleration limit parameters, acceleration rates, electromechanical configuration of a motor present within a drive configuration, indications of different tooling loaded onto a motor shaft, among other types of data. For example, a process state may be identified based on one or more position commands sent to one or more motion devices. Acquired data of other devices may be different. For example, in some systems, process variables of a Supervisory Control and Data Acquisition (SCADA) system may indicate a process state and thus be obtained as acquired data. There may be other process variables associated with different products that may associate an operation of an asset to a process state and thus be used to train a baseline of a model.

Process state identification operations may be sensitive to the quality of the acquired data. For example, noisy acquired data may cause inaccurate process state identification.

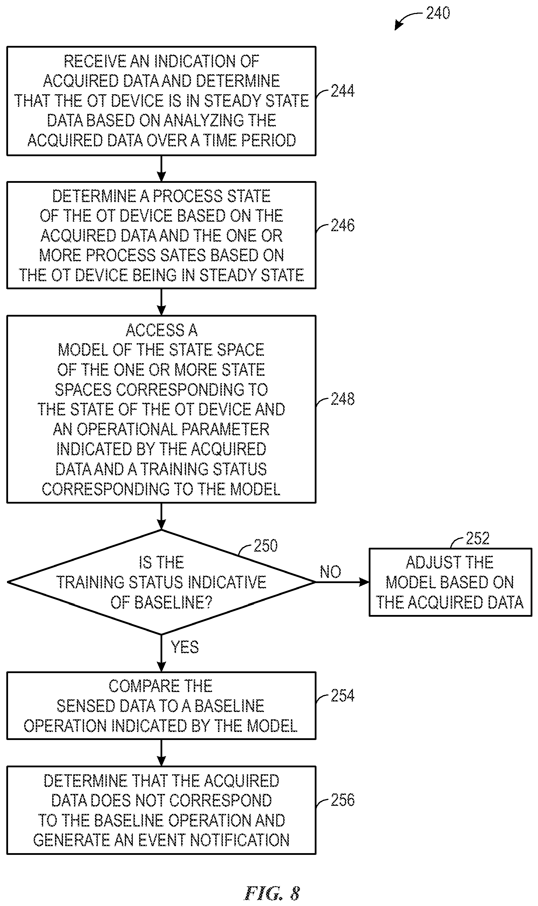

Among the quality control concerns associated with the acquired data is whether or not the data is acquired while an asset is at an operational steady state or while the operations of the asset are changing. Using data acquired while the asset is not at steady state may cause incorrect process state identification and/or may skew device model training. Systems and methods described herein may determine whether an asset is in steady state based on the acquired data and, when the asset is in steady state, proceed with process state identification based on the acquired data, such as described below with FIG. 8.

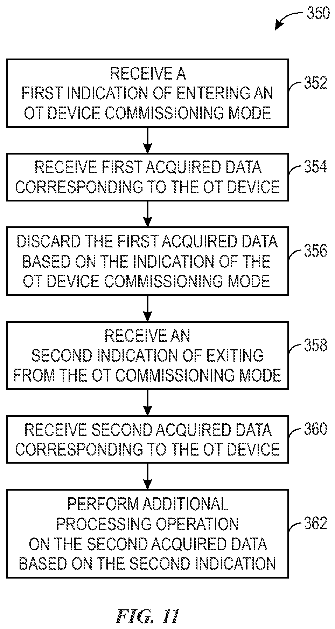

Another quality control concerns associated with the acquired data is whether the data is acquired while an asset is being installed originally or in a commissioning mode, such as post-repair. Using data acquired while the asset is not actually operating in the process may cause incorrect process state identification and/or may skew device model training. Systems and methods described herein may determine whether an asset is in a commissioning mode and, when the asset is, discard the acquired data as to avoid training or comparing using the acquired data, such as described below with FIG. 11.

As also described herein, any suitable operational parameter may be used to differentiate between operations within a process state. For example, a device may be operated according to a motion profile. The motion profile may be an indication of a current pattern by which to drive a moving component of the device. Indeed, the motion profile may be a type of device configuration as opposed to sensed data indicative of an ongoing operation (e.g., speed). By applying operational parameters in this way as to include device configuration and instruction data, the applicability of in situ device model training and baseline operations may expand to include more devices than merely basing the switching between process states on indications of mechanical loading.

As also described herein, these baseline monitoring and control operations may be deployed as part of a containerized application (e.g., container-based MPC system) with the various benefits from container technology. Indeed, an industrial automation system may include a container orchestration system in an operational technology (OT) network. The container orchestration system may work in tandem with an informational technology (IT) network and/or industrial control systems to control, monitor, and otherwise manage devices of the industrial automation system. In this way, the container orchestration system may aid collecting and analyzing data from OT devices. Containers include packages of software that may include various elements needed to run in one or more software environments. As a result, containers may be deployed as individual software modules that perform specific operations or functions on the data provided to the respective container. Deploying a container closer to a data source may enable more direct, unprocessed access to data from the data source, which may improve a quality of results being produced by the operations of the containers - such as an accuracy of a prediction made by the container. When the container is done performing the desired operation, it may be spun down or terminated to free up previously consume computing resources.

It is noted that reference is made herein to continuous processing and discrete/batch processing. Continuous processing may refer to a sequential flow of materials through a production portion of the industrial automation system, where the sequential flow may be uninterrupted. Continuous processing may involve material inputs flowing in and material outputs flowing out in a relatively uninterrupted continual operation, such as may be the case in petrochemical manufacturing, power generation, and even some food and/or beverage manufacturing. Discrete/batch processing may refer to handling and/or processing of materials in discrete units or batches of materials, such as may be used in automotive manufacturing, electronics assembly manufacturing, and/or some pharmaceutical manufacturing. In these operations, a production process may be divided into respective units, where each material batch may go through a specific set of units before a new material batch is processed. Indicating the change in materials may be relatively straightforward in the discrete/batch processing system since clear transitions between materials being processed occur. Indicating the change in materials may be less straightforward in the continuous processing system since transitions between materials being processed may be less clear and may overlap between an input and output of an asset and/or between different portions of the overall process. Thus, detecting the change in materials based on acquired sensor data may be relatively more reliable indication of material being processed than receiving an indication from a control system when trying to identify what material is handled by an asset in a continuous process. Some industrial automation systems may use one, the other, or a combination of both continuous processing and discrete/batch processing, depending on specific requirements of products and/or production processes. In any of these examples, as materials change, a respective asset of the industrial automation system may change from one process state (e.g., handling a first material) to another process state (e.g., handling a second material). In this way, an asset may operate in one of several process states over time based on which of multiple materials that it handles, at a given time, while implementing continuous processing and/or discrete/batch processing. The asset, when operated into one of the process states, may operate according to a particular operational curve, like a torque-speed curve. The operational curves may be different for the different process states due to different physical material characteristics (e.g., viscosity, density, particulate content, temperature) of the different materials. Thus, sensing properties of the asset may provide insight into which of the different process states that the asset is operating in at a particular time since the different process states may correspond to one or more different operational curves.

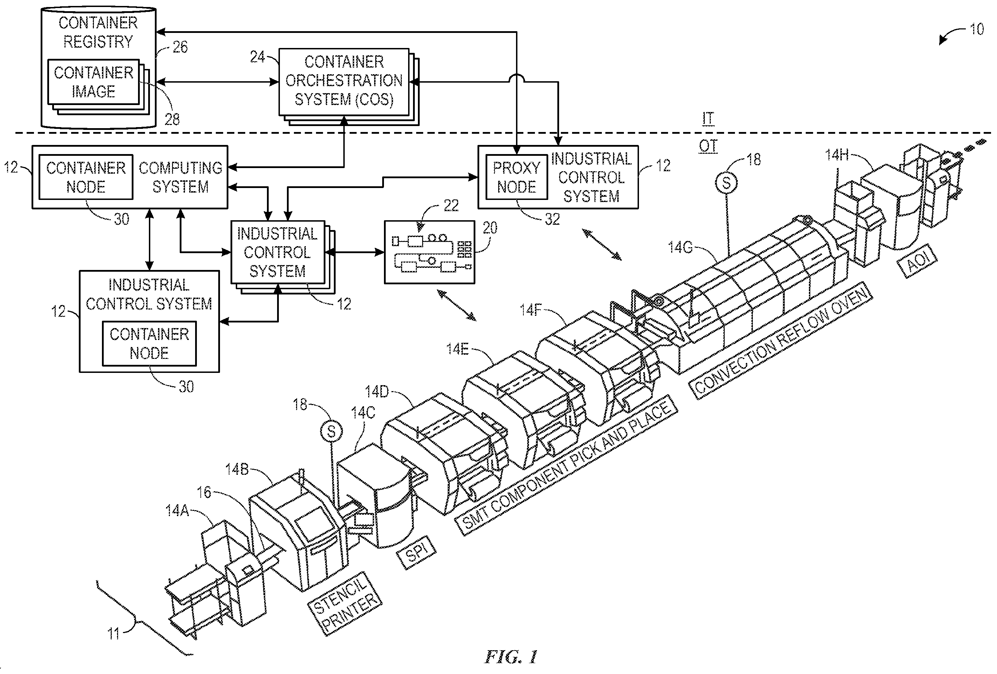

By way of introduction, FIG. 1 is a perspective view of an example industrial automation system 10 controlled by one or more industrial control systems 12. The industrial automation system 10 includes stations 14A through 14H having machine components and/or machines to conduct functions within an automated process (e.g., system 11), such as printed circuit board (PCB) manufacturing, as is depicted. The automated process may begin at a station 14A used for loading objects, such as substrates, into the industrial automation system 10 via a conveyor section 16. The conveyor section 16 may transport the objects to a station 14B to perform a first action, such a printing solder paste to the substrate via stenciling. As objects exit from the station 14B, the conveyor section 16 may transport the objects to a station 14C for solder paste inspection (SPI) to inspect printer results, to a station 14D, 14E, and 14F for surface mount technology (SMT) component placement, to a station 14G for convection reflow oven to melt the solder to make electrical couplings, and finally to a station 14H for automated optical inspection (AOI) to inspect the object manufactured (e.g., the manufactured printed circuit board). After the objects proceed through the various stations, the objects may be removed from the station 14H, for example, for storage in a warehouse or for shipment. Clearly, for other applications, the particular system, machine components, machines, stations, and/or conveyors may be different or specially adapted to the application.

For example, the industrial automation system 10 may include machinery to perform various operations in a compressor station, an oil refinery, a batch operation for making food items, chemical processing operations, brewery operations, mining operations, a mechanized assembly line, and so forth. Accordingly, the industrial automation system 10 may include a variety of operational components, such as electric motors, valves, actuators, temperature elements, pressure sensors, or a myriad of machinery or devices used for manufacturing, processing, material handling, and other applications. The industrial automation system 10 may also include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation system 10 may also include motors, protection devices, switchgear, compressors, and the like. Each of these described operational components may correspond to and/or generate a variety of operational technology (OT) data regarding operation, status, sensor data, operational modes, alarm conditions, or the like, that may be desirable to output for analysis with IT data from an IT network, for storage in an IT network, for analysis with expected operation set points (e.g., thresholds), or the like.

In certain embodiments, one or more properties of the industrial automation system 10 equipment, such as the stations 14A through 14H, may be monitored and controlled by the industrial control systems 12 for regulating control variables. For example, sensing devices (e.g., sensors 18) may monitor various properties of the industrial automation system 10 and may be used by the industrial control systems 12 at least in part in adjusting operations of the industrial automation system 10 (e.g., as part of a control loop). In some cases, the industrial automation system 10 may be associated with devices used by other equipment. For instance, scanners, gauges, valves, flow meters, and the like may be disposed on or within the industrial automation system 10. Here, the industrial control systems 12 may receive data from the associated devices and use the data to perform their respective operations more efficiently. For example, a controller of the industrial automation system 10 associated with a motor drive may receive data regarding a temperature of a connected motor and may adjust operations of the motor drive based on the data.

The industrial control systems 12 may be communicatively coupled to a display/operator interface 22 (e.g., a human-machine interface (HMI)) and to devices of the industrial automation system 10. It should be understood that any suitable number of industrial control systems 12 may be used in a particular industrial automation system 10 embodiment. The industrial control systems 12 may facilitate representing components of the industrial automation system 10 through programming objects that may be instantiated and executed to provide simulated functionality similar or identical to the actual components, as well as visualization of the components, or both, on the display/operator interface 22. The programming objects may include code and/or instructions stored in the industrial control systems 12 and executed by processing circuitry of the industrial control systems 12. The processing circuitry may communicate with memory circuitry to permit the storage of the component visualizations.

As illustrated, a display/operator interface 22 depicts representations of the components of the industrial automation system 10. The industrial control system 12 may use data transmitted by sensors 18 to update visualizations of the components via changing one or more statuses, states, and/or indications of current operations of the components. These sensors 18 may be any suitable device adapted to provide information regarding process conditions. Indeed, the sensors 18 may be used in a process loop (e.g., control loop) that may be monitored and controlled by the industrial control system 12. As such, a process loop may be activated based on process inputs (e.g., an input from the sensor 18) or direct input from a person via the display/operator interface 22. The person operating and/or monitoring the industrial automation system 10 may reference the display/operator interface 22 to determine various statuses, states, and/or current operations of the industrial automation system 10 and/or for a particular component. Furthermore, the person operating and/or monitoring the industrial automation system 10 may adjust to various components to start, stop, power-down, power-on, or otherwise adjust an operation of one or more components of the industrial automation system 10 through interactions with control panels or various input devices.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, sensors 18 may gather OT data indicative of one or more operations of the industrial automation system 10 or the industrial control system 12. In this way, the OT data may be analog data or digital data indicative of measurements, statuses, alarms, or the like associated with operation of the industrial automation system 10 or the industrial control system 12.

The industrial control systems 12 described above may operate in an OT space in which OT data is used to monitor and control OT assets, such as the equipment illustrated in the stations 14A through 14H of the industrial automation system 10 or other industrial equipment. The OT space, environment, or network generally includes direct monitoring and control operations that are coordinated by the industrial control system 12 and a corresponding OT asset. For example, a programmable logic controller (PLC) may operate in the OT network to control operations of an OT asset (e.g., drive, motor). The industrial control systems 12 may be specifically programmed to communicate directly with the respective OT assets.

A container orchestration system, on the other hand, may operate in an information technology (IT) environment. That is, the container orchestration system may include a cluster of multiple computing devices that coordinates an automatic process of managing or scheduling work of individual containers for applications within the computing devices of the cluster. In other words, the container orchestration system may be used to automate various tasks at scale across multiple computing devices. By way of example, the container orchestration system may automate tasks such as configuring and scheduling deployment of containers, provisioning and deploying containers, determining availability of containers, configuring applications in terms of the containers that they run in, scaling of containers to equally balance application workloads across an infrastructure, allocating resources between containers, performing load balancing, traffic routing, and service discovery of containers, performing health monitoring of containers, securing the interactions between containers, and the like. In any case, the container orchestration system may use configuration files to determine a network protocol to facilitate communication between containers, a storage location to save logs, and the like. The container orchestration system may also schedule deployment of containers into clusters and identify a host (e.g., node) that may be best suited for executing the container. After the host is identified, the container orchestration system may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the run time dependencies with the container, the container may perform in the same manner regardless of the host in which it is operating. In some embodiments, containers may be stored in a container registry 26 as container images 28. The container registry 26 may be any suitable data storage or database that may be accessible to the container orchestration system 24. The container image 28 may correspond to an executable software package that includes the tools and data employed to execute a respective application. That is, the container image 28 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 24. The deployment configuration file may be stored in the container registry 26 along with the respective container images 28 associated with the deployment configuration file. The deployment configuration file may include a list of different pods and a number of replicas for each pod that should be operating within the container orchestration system 24 at any given time. Each pod may correspond to a logical unit of an application, which may be associated with one or more containers. The container orchestration system 24 may coordinate the distribution and execution of the pods listed in the deployment configuration file, such that the desired state is continuously met. In some embodiments, the container orchestration system 24 may include a master node that retrieves the deployment configuration files from the container registry 26, schedules the deployment of pods to the connected nodes, and ensures that the desired state specified in the deployment configuration file is met. For instance, if a pod stops operating on one node, the master node may receive a notification from the respective worker node 68 that is no longer executing the pod and deploy the pod to another worker node 68 to ensure that the desired state is present across the cluster of nodes.

As mentioned above, the container orchestration system 24 may include a cluster of computing devices, computing systems, or container nodes that may work together to achieve certain specifications or states, as designated in the respective container. In some embodiments, container nodes 30 may be integrated within industrial control systems 12 as shown in FIG. 1. That is, container nodes 30 may be implemented by the industrial control systems 12, such that they appear as worker nodes 68 to the master node in the container orchestration system 24. In this way, the master node of the container orchestration system 24 may send commands to the container nodes 30 configurable to perform applications and operations for the respective industrial equipment.

With this in mind, the container nodes 30 may be integrated with the industrial control systems 12, such that they serve as passive-indirect participants, passive-direct participants, or active participants of the container orchestration system 24. As passive-indirect participants, the container nodes 30 may respond to a subset of all of the commands that may be issued by the container orchestration system 24. In this way, the container nodes 30 may support limited container lifecycle features, such as receiving pods, executing the pods, updating a respective filesystem to included software packages for execution by the industrial control system 12, and reporting the status of the pods to the master node of the container orchestration system 24. The limited features implementable by the container nodes 30 that operate in the passive-indirect mode may be limited to commands that the respective industrial control system 12 may implement using native commands that map directly to the commands received by the master node of the container orchestration system 24. Moreover, the container node 30 operating in the passive-indirect mode of operation may not be capable to push the packages or directly control the operation of the industrial control system 12 to execute the package. Instead, the industrial control system 12 may periodically check the file system of the container node 30 and retrieve the new package at that time for execution.

As passive-direct participants, the container nodes 30 may operate as a node that is part of the cluster of nodes for the container orchestration system 24. As such, the container node 30 may support the full container lifecycle features. That is, container node 30 operating in the passive-direct mode may unpack a container image and push the resultant package to the industrial control system 12, such that the industrial control system 12 executes the package in response to receiving it from the container node 30. As such, the container orchestration system 24 may have access to a worker node 68 that may directly implement commands received from the master node onto the industrial control system 12.

In the active participant mode, the container node 30 may include a computing module or system that hosts an operating system (e.g., Linux) that may continuously operate a container host daemon that may participate in the management of container operations. As such, the active participant container node 30 may perform any operations that the master node of the container orchestration system 24 may perform. By including a container node 30 operating in the OT space, the container orchestration system 24 is capable of extending its management operations into the OT space. That is, the container node 30 may provision devices in the OT space, serve as a proxy node 32 to provide bidirectional coordination between the IT space and the OT space, and the like. For instance, the container node 30 operating as the proxy node 32 may intercept orchestration commands and cause industrial control system 12 to implement appropriate machine control routines based on the commands. The industrial control system 12 may confirm the machine state to the proxy node 32, which may then reply to the master node of the container orchestration system 24 on behalf of the industrial control system 12.

Additionally, the industrial control system 12 may share an OT device tree via the proxy node 32. As such, the proxy node 32 may provide the master node with state data, address data, descriptive metadata, versioning data, certificate data, key information, and other relevant parameters concerning the industrial control system 12. Moreover, the proxy node 32 may issue requests targeted to other industrial control systems 12 to control other OT devices. For instance, the proxy node 32 may translate and forward commands to a target OT device using one or more OT communication protocols, may translate and receive replies from the OT devices, and the like. As such, the proxy node 32 may perform health checks, provide configuration updates, send firmware patches, execute key refreshes, and other OT operations for other OT devices.

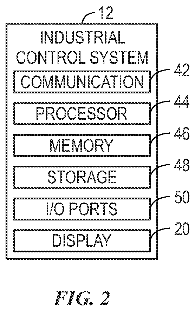

With the foregoing in mind, FIG. 2 is a block diagram of an example computing device, such as the industrial control system 12, that may be used with the embodiments described herein. The industrial control system 12 may include a communication component 42, a processor 44, a memory 46, a storage 48, input/output (IO) ports 50, a display 20, and the like. The communication component 42 may be a wireless or wired communication component that facilitates communication between the container orchestration system 24 and the industrial control system 12, or any other suitable electronic device. The processor 44 may be any type of computer processor or microprocessor capable of executing computer- executable code. The processor 44 may also include multiple processors that may perform the operations described below.

The memory 46 and the storage 48 may be any suitable article of manufacture that may serve as media to store processor-executable code, data, or the like. These articles of manufacture may represent computer-readable media (i.e., any suitable form of memory or storage) that may store the processor-executable code used by the processor 44 to perform the presently disclosed techniques. The memory 46 and the storage 48 may represent non-transitory computer-readable media (e.g., any suitable form of memory or storage) that may store the processor-executable code used by the processor 44 to perform various techniques described herein. It should be noted that non-transitory merely indicates that the media is tangible and not a signal.

The IO ports 50 may couple to one or more sensors 18, one or more input devices, one or more displays, or the like to facilitate human or machine interaction with the industrial control system 12. For example, based on a notification provided to a user via a display 20, the user may use an input device to instruct the adjustment of an OT device.

The display 20, as discussed above, may operate to depict visualizations associated with software or executable code being processed by the processor 44. In one embodiment, the display 20 may be a touch display capable of receiving inputs from a user of the industrial control system 12. The display 20 may be any suitable type of display, such as a liquid crystal display (LCD), plasma display, or an organic light emitting diode (OLED) display, for example. Additionally, in one embodiment, the display 20 may be provided in conjunction with a touch- sensitive mechanism (e.g., a touch screen) that may function as part of a control interface for the industrial control system 12.

Although FIG. 2 is depicted with respect to the computing device being the industrial control system 12, it should be noted that the container orchestration system 24, the container nodes 30, the proxy node 32, or any other computing or processing device described herein may also include the same or similar components to perform, or facilitate performing, the various operations described herein. Moreover, it should be understood that the components described with respect to FIG. 2 are exemplary figures and the industrial control system 12 and other suitable computing systems may include additional or fewer components as detailed above.

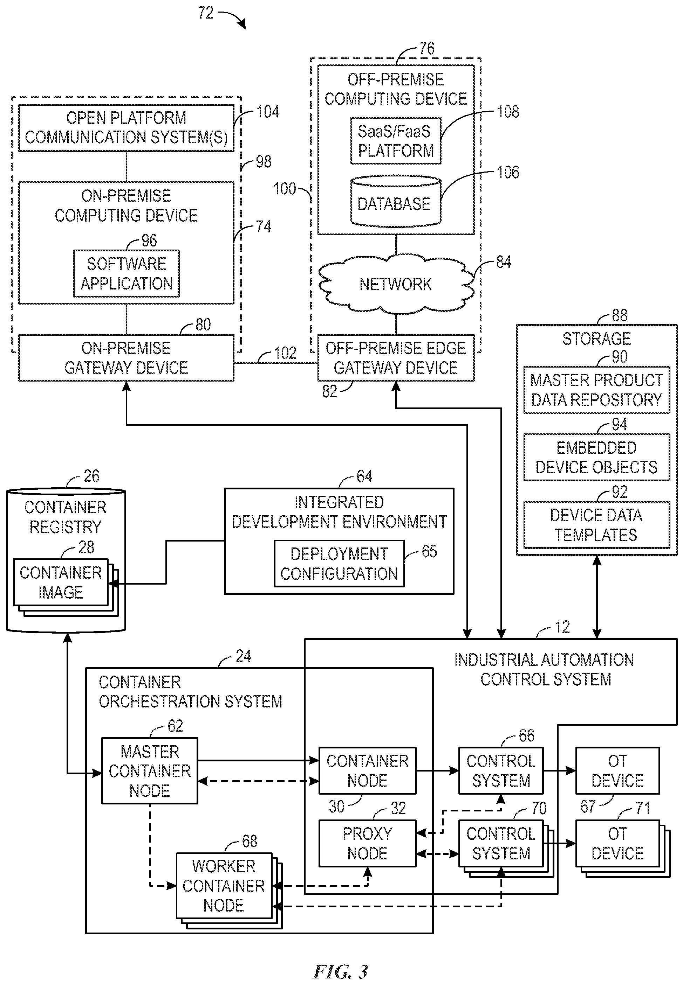

With the foregoing in mind, FIG. 3 illustrates a block diagram of an example operational technology (OT) network, a first computing system (e.g., on-premise computing system), and a second computing system (e.g., off-premise computing system), one or more of which may coordinate with the container orchestration system 24. The first computing system may correspond computing devices disposed as part of a domain 98, which could be located on-premise of the industrial automation system 10, such as computing device 74, on-premise gateway device 80, an open platform communication system(s) 104, or the like.

The second computing system may correspond to computing devices disposed as part of a domain 100, which could be located off-premise of the industrial automation system 10, such as computing device 76, devices providing a network 84, an off-premise edge gateway device 82, or the like. In some example systems, one or more other devices of the domain 98 may be physically located outside of the industrial automation system 10, such as may be the case if a device is remotely accessing a software application 96 while located at a second physical location different from that of the industrial automation system 10. This may similarly apply to off-premise devices and thus one or more other devices of the domain 100 may be physically located outside of the industrial automation system 10. Thus, when user equipment remotely accesses the software application 96 while located at "home" or at the second physical location, it should be understood that the user equipment may not be automatically considered an off-premise computing device by nature of the user equipment being at the second physical location.

With this in mind, there may be benefits that arise from providing some access to data of the industrial automation system 10 to devices and/or platform services of the domain 100. Indeed, these off-premise systems may have access to higher-levels of information, such as sensed data or operational data spanning two or more industrial automation systems 10, and thus may provide enhanced monitoring or analysis capabilities relative to that of the industrial control system 12 and/or on-premise computing devices.

Indeed, computing devices 74 may include a variety of electronic devices associated with the industrial automation system 10, for example one or more user equipment (e.g., cellular devices) disposed off-premise but communicatively coupled to one or more computing devices disposed on-premise, such as when the user equipment is located at a home of an operator and is accessing data associated with the industrial automation system 10. The industrial control system 12 described above may include the computing devices 74, a gateway device 80, the industrial control system 12, and the edge gateway device 82, where the edge gateway device 82 may communicate with computing devices 76 via a network 84. When accessing web-based applications and/or graphical user interfaces, as described above, the computing device 74 may do so via the network 84 and/or via another network configurable to communicatively couple to the network 84 (illustrated via dashed line). Data generated by the gateway device 80, the computing device 74, the edge gateway device 82, and/or the computing device 76 may be exchanged among the system 72 to perform additional historical data logging, additional analysis, perform security operations (e.g., authenticating a user), or the like. The gateway devices may intercommunicate via wired or wireless communicative coupling 102.

In some cases, the edge gateway device 82 may provide the acquired sensor data to software applications executed outside the industrial automation system 10 on the computing device 76 (e.g., SaaS/FaaS Platform 108, asset anomaly predictor). The software applications outside of the industrial automation system 10 may perform real time analysis of the sensor data within the industrial automation device 86 that had been acquired through the edge gateway device 82. As one example, the computing device 76 may provide a software-as-a-service and/or a Function-as-a-Service (SaaS/FaaS) platform 108 via the network 84. In this way, a processor of the computing device 76 may execute instructions stored in memory and/or storage to perform the asset anomaly predictor systems and methods. In this way, the asset anomaly predictor may correspond to instructions stored in non-transitory, computer readable medium of the computing device 76 that, when executed by processing circuitry, cause the computing device 76 to perform operations discussed herein as being performed by the asset anomaly predictor. The database 106 may include any suitable storage device, server, or the like, such as a web server (e.g., a unitary Apache installation), an application server (e.g., unitary JAVA Virtual Machine), and/or a database server (e.g., a unitary relational database management system (RDBMS) catalog). The SaaS/FaaS platform 108 provided by the edge gateway device 82 may include platforms such as THINGWORX^{®} registered trademark of PTC, Inc., AZURE^{®} registered trademark of Microsoft Corporation, FIIX^{®} registered trademark of Fiix, Inc., INFLUXDB^{®} registered trademark of InfluxData, Inc. or the like. The SaaS/FaaS platform 108 may manage data stored in the database 106 based on data received from the edge gateway device 82. In some cases, the computing device 76 may correspond to one or more data centers that may include one or more servers, one or more virtual servers, or the like, that each may be operated on one or more physical computing devices. The computing device 76 may provide one or more dashboards via a web-enabled communicative coupling to one or more other computing devices (e.g., computing device 74) to enable presentation of information generated via the SaaS/FaaS platform 108 through outputs of the one or more other computing devices. The network 84 may be any suitable wired or wireless network, such as a network enabled by the Internet or a cloud-based network. The network 84 may be an off-premise network used by the computing device 76 to transmit data to the edge gateway device 82. Using this information, the network 84 may route data and instructions between the computing device 76, database 106, and the edge gateway device 82. The edge gateway device 82 may have access to network information used to communicate with the industrial control system 12 and/or the gateway device 80, such as corresponding internet protocol (IP) address, uniform resource locators (URLs), or the like. In some cases, the edge gateway device 82 may be disposed on-premise of the industrial automation system 10 and be owned by a same entity who owns the gateway device 80 and have connectivity to the network 84.

After obtaining the data from the industrial automation device 86, the computing device 76 and/or the computing device 74 may log the data in real time to perform historical trending and analysis of the data over time. The computing device 76 and/or the computing device 74 may analyze the stored data over time. This process may involve historical trending of the data logged over time. The edge gateway device 82 may communicate via the network 84 to access a software application and/or to log the data in a database 106.

To support or supplement these monitoring and/or control operations, On-premise computing systems, off-premise computing systems, the industrial control system 12, or the like, may generate a request for a container. When doing so the request may be transmitted via a gateway device 80 and/or an edge gateway device 82.

The gateway device 80 and the edge gateway device 82 may be communicatively coupled to each other and to the industrial control system 12. The gateway device 80 may operate on a logical boundary between the industrial control system 12 and a domain 98 which refers to a computing domain in which associated devices within the domain 98 communicate via a first communication network and/or using communication methods corresponding to a first communication method or protocol. The edge gateway device 82 may operate on a logical boundary between the industrial automation system 10 and a different domain 100. The domain 100 may correspond to an off-premise computing domain in which associated devices within the domain 100 communicate via a second communication network and/or using communication methods corresponding to a second communication method or protocol. In both cases, the industrial control system 12 may use a third communication network to communicate with the gateway device 80, the edge gateway device 82, and the industrial automation devices 86. In some cases, the third communication network may be based on operations that expose data to the first communication and/or second communication network in a format and/or protocol that may be consistently consumed between the various networks, such as symbol and template based operations and communication methods. When the domain 100, the domain 98, and/or the industrial control system 12 use different protocols, formats, or networks, communications between the domains may be converted between the various protocols, formats, or networks, such as when transmitting a request for the container and/or receiving or sending data via the gateway devices 80, 82 or any of the networks.

To generate a container that may be referenced via indication in the request, any suitable method may be used. By way of operation, an integrated development environment (IDE) tool 64 may be used by an operator to develop a deployment configuration file 65. One or more IDE tools 64 may be disposed in the domain 98 and/or the domain 100, which may be accessed using computing device 74 and/or computing device 76. As mentioned above, the deployment configuration file 65 may include details regarding the containers, the pods, constraints for operating the containers/pods, and other information that describe a desired state of the containers specified in the deployment configuration file 65. In some embodiments, the deployment configuration file 65 may be generated in a YAML file, a JSON file, or other suitable file format that is compatible with the container orchestration system 24. After the IDE tool 64 generates the deployment configuration file 65, the IDE tool 64 may transmit the deployment configuration file 65 to the container registry 26, which may store the file along with container images 28 representative of the containers stored in the deployment configuration file 65. In some embodiments, the master container node 62 may receive the deployment configuration file 65 via the container registry 26, directly from the IDE tool 64, or the like. The master container node 62 may use the deployment configuration file 65 to determine a location to gather the container images 28, determine communication protocols to use to establish networking between container nodes 30, determine locations for mounting storage volumes, locations to store logs for the containers, and the like.

The container orchestration system 24 may include a master container node 62 to coordinate the execution and results from the various container nodes. The container orchestration system 24 may include a collection of nodes that are used to achieve a desired state of one or more containers across multiple nodes, where a container may be generated based on operations of the master container node 62 in response to an instruction from another computing device of FIG. 3, in response to a schedule, in response to operations, or the like. A request for the container may identify which generated container stored in the container registry 26 is to be executed. By way of example, the master container node 62 may coordinate all of the interactions between nodes of the cluster that make up the container orchestration system 24. Indeed, the master container node 62 may be responsible for deciding the operations that will run on container nodes 30 including scheduling workloads (e.g., containerized applications), managing the workloads' lifecycle, scaling, and upgrades, managing network and storage resources for the workloads, and the like.

The master container node 62 that may execute control plane processes for the container orchestration system 24. The control plane processes may include the processes that enable the container orchestration system 24 to coordinate operations of the container nodes 30 to meet the desired states. As such, the master container node 62 may execute an applications programming interface (API) for the container orchestration system 24, a scheduler component, core resource controllers, and the like. The master container node 62 may run an API server to handle requests and status updates received from the container nodes 30. In some cases, the master container node 62 may deploy containers to the container nodes 30 based on the desired state provided in the deployment configuration file 65. That is, the master container node 62 may schedule the deployment of a container based on constraints (e.g., CPU or memory availability) provided in the deployment configuration file 65. After the containers are operating on the container nodes 30, the master container node 62 may manage the lifecycle of the containers to ensure that the containers specified by the deployment configuration file 65 is operating according to the specified constraints and the desired state.

Keeping the foregoing in mind, the industrial control system 12 may not use an operating system (OS) that is compatible with the container orchestration system 24. That is, the container orchestration system 24 may be configurable to operate in the IT space that involves the flow of digital information. In contrast, the industrial control system 12 may operate in the OT space that involves managing the operation of physical processes and the machinery used to perform those processes. For example, the OT space may involve communications that are formatted according to OT communication protocols, such as FactoryTalk LiveData, EtherNet/IP, Common Industrial Protocol (CIP), OPC Direct Access (e.g., machine to machine communication protocol for industrial automation developed by the OPC Foundation), OPC Unified Architecture (OPCUA), or any suitable OT communication protocol (e.g. DNP3, Modbus, Profibus, LonWorks, DALI, BACnet, KNX, EnOcean). Because the industrial control systems 12 operate in the OT space, the industrial control systems may not be capable of implementing commands received via the container orchestration system 24.

In certain embodiments, the container node 30 may be programmed or implemented in the industrial control system 12 to serve as a node agent that can register the industrial control system 12 with the master container node 62. The node agent may or may not be the same as the proxy node 32 shown in FIG. 1. For example, the industrial control system 12 may include a programmable logic controller (PLC) that does not support an operating system (e.g., Linux) for receiving and/or implementing requested operations issued by the container orchestration system 24. However, the PLC may perform certain operations that may be mapped to certain container events. As such, the container node 30 may include software and/or hardware components that may map certain events or commands received from the master container node 62 into actions that may be performed by the PLC. After converting the received command into a command interpretable by the PLC, the container node 30 may forward the mapped command to the PLC that may implement the mapped command. As such, the container node 30 may operate as part of the cluster of nodes that make up the container orchestration system 24, while a control system 66 (e.g., PLC) that coordinates the OT operations for an OT device 67 in the industrial control system 12. The control system 66 may include a controller, such as a programmable logic controller (PLC), a programmable automation controller (PAC), or any other controller that may monitor, control, and operate an industrial automation device or component.

The industrial automation device or component may correspond to an OT device 67. The OT device 67 may include any suitable industrial device that operates in the OT space. As such, the OT device 67 may be involved in adjusting physical processes being implemented via the industrial automation system 10. In some embodiments, the OT device 67 may include motor control centers, motors, human machine interfaces (HMIs), operator interfaces, contactors, starters, sensors, drives, relays, protection devices, switchgear, compressors, network switches (e.g., Ethernet switches, modular-managed, fixed-managed, service-router, industrial, unmanaged, etc.) and the like. In addition, the OT device 67 may also be related to various industrial equipment such as mixers, machine conveyors, tanks, skids, specialized original equipment manufacturer machines, and the like. The OT device 67 may also be associated with devices used by the equipment such as scanners, gauges, valves, flow meters, and the like. In one embodiment, every aspect of the OT device 67 may be controlled or operated by the control system 66.

In the present embodiments described herein, the control system 66 may thus perform actions based on commands received from the container node 30. By mapping certain container lifecycle states into appropriate corresponding actions implementable by the control system 66, the container node 30 enables program content for the industrial control system 12 to be containerized, published to certain registries, and deployed using the master container node 62, thereby bridging the gap between the IT-based container orchestration system 24 and the OT- based industrial control system 12.

As mentioned above, the industrial control system 12 may access data from one or more of the OT devices 67, 71 (e.g., OT device 67 and/or one or more of OT devices 71) using symbolic data operations enabled by distributed IO products and/or other connected devices. The distributed IO products may include some of the circuitry described with reference to the industrial control system 12. The industrial control system 12 may implement operations or adjustments to operations of OT devices 67, 71 via the control systems 66, 70. In some systems, the controls 66, 70 respectively control one or more OT devices 67, 71. Firmware of the OT devices 67, 71 may query a data source, or receive data from a data source based on the symbol, and store the retrieved datasets as instances of symbols with data type and formatting derived from template object instances that correspond to the symbol represented in the OT devices 67, 71. The data source may be a storage component that the industrial automation device is communicatively coupled to, such as a data repository that receives sensed data from one or more sensors. The OT devices 67, 71 may directly receive sensed data from one or more sensors and/or may correspond to a sensor that generates sensed data. This data received from the storage component or from the sensor may be stored in, or otherwise associated with, a template dataset to enable symbolic access of the data.

OT devices 67, 71 may store associated data into a template dataset associated with a template accessed via symbolic data methods may enhance overall industrial automation system 10 operation. Symbols may integrate at least some of data generated via standard devices and connected devices (e.g., legacy devices without symbolic data compatibility) and data generated via intelligent devices (e.g., devices with symbolic data compatibility) into a consistent format that may be accessed via an information device model format that corresponds to the industrial automation system 10.

Storage 88 may include a master product data repository 90, device data templates 92, and embedded device objects 94. The storage 88 may be any suitable type of data storage device, such as a database, memory, or the like.

The master product data repository 90 may include product capability profiles, computer-aided design (CAD) models and attributes, digital twin models, augmented reality and/or virtual reality libraries, digital presence content management, persistence device models, reporting, graphics, application enablement templates, or the like. The libraries, profiles, models, and so on included in the master product data repository 90 may each reference or operate based on the symbolic data between the master product data repository 90, the industrial automation devices 86, on-premise gateway device 80, off-premise edge gateway device 82, and/or any suitable on- and/or off-premise control and processing systems.

The device data templates 92 may include templates as data models that may include one or more symbols and/or one or more templates. The device data templates 92 may be considered a template data definition and may indicate how to process and/or characteristics of template data relative to one or more templates and/or one or more symbols. Multiple template object instances may be associated together in one template instance when, for example, a parent device includes multiple nested devices. The device data templates 92 may harmonize and standardize different data models (e.g., different vendor data models) with awareness of context data for higher level consumption. Thus, the device data templates 92 may store or associate template object instances, data, and/or context data to each other.

The embedded device objects 94 may correspond to a data structure that associates collections of symbols to a device type. A template may define data types and formatting of data included in the data structure, and the template may be used to decode a set of data associated with the data structure. When registering an industrial automation device 86 to the industrial automation system 10, the industrial control system 12 may receive a data structure of the embedded device objects 94 corresponding to a type of the industrial automation device 86. Indeed, the industrial control system 12 may reference data in a symbol object instance received from the industrial automation device 86, such as identifier data, to match a type of the industrial automation device 86 to one or more of the embedded device objects 94. The industrial control system 12 may use the embedded device objects 94 to generate a template instance for the industrial automation device 86 in which future data generated and future contexts received may be populated into by the industrial control system 12 and/or by the industrial automation device 86. By using the embedded device object 94 that corresponds to the type of the industrial automation device 86, the industrial control system 12 may generate a template object instance consistent in structure with other template object instances generated previously for the same type of industrial automation devices 86.

The embedded device objects 94 may include data structures for logical uses, physical uses, and application uses. For example, data structures of the embedded device objects 94 corresponding to logical uses include flying start templates, motor control templates, variable boost templates, sleep/wake templates, and the like. Expected states that may be included in a template as contextual data for a motor drive include "Running," "Ready," "At Speed," "Active," "At Zero Speed," "Enable On," "Alarmed," "Connected," "Faulted," or the like. The embedded device objects 94 may correspond to power structure templates, motor data templates, predictive maintenance templates, encoder feedback templates, fan and/or pump templates, conveyor templates, hoist and/or lift/templates, and the like. These templates may be referenced when processing generated data. A template may indicate what data to expect in association with a motor, what data to expect in association with switchgear or power distribution equipment, and the like. In some cases, the embedded device objects 94 may correspond to one or more unit-specific templates.

Data associated with the various device-level systems may be accessed by other components of the industrial automation system 10 via the on-premise gateway device 80. The on-premise gateway device 80 may communicate on networks internal to the industrial automation system 10 with devices within the industrial automation system 10. The on-premise gateway device 80 may be locally connected to one or more industrial automation devices 86, the industrial control system 12, or both, and may communicate with the various devices using messages and/or control signals that employ some operational technology (OT) communication schemes, such as the common industrial protocol (CIP). The on-premise gateway device 80 may access symbols stored in the industrial automation devices 86 to process read requests as opposed to waiting to receive identifying information about each device and mapping the identifying information to the requested data for each device to read the requested data. The software application 96 may receive the symbols from the on-premise gateway device 80 and analyze data of the symbols to perform analysis, reporting, historical trending, or the like. The on-premise gateway device 80 may implement control loops based on the symbols and/or may analyze data received via the symbols in real time. Indeed, preparing data based on template object instances and symbol object instances may allow for more efficient processing, uniform comparisons between datasets generated by different devices, or the like. By using systems and methods to reference operational data in a manner using labels understandable to both machine and software, fewer look-up operations may be used to route data from a data source to a data consuming device, and thus fewer computing operations may be used to implement control and processing operations relative to other systems not using symbolic data operations.

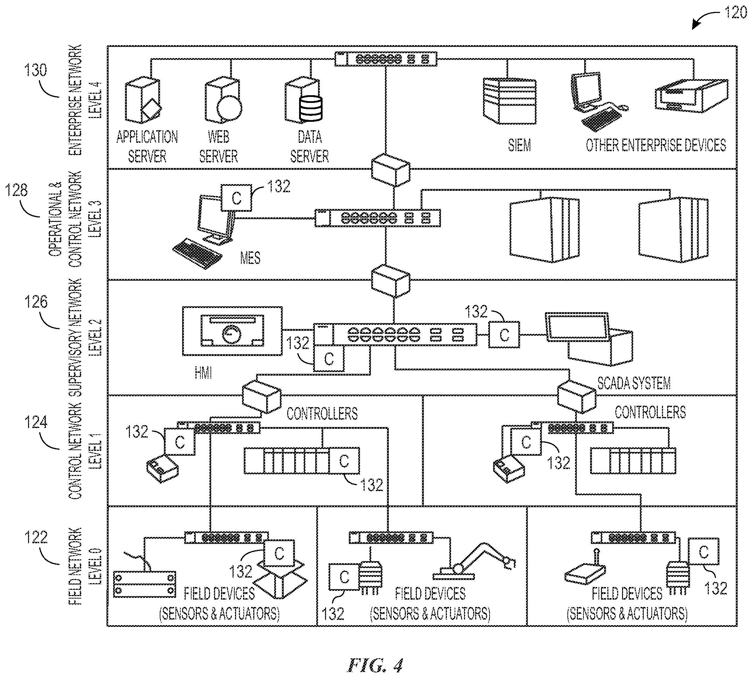

With the foregoing in mind, a container orchestration system 24 may determine to deploy one or more containers to one or more lower hierarchy devices of the industrial automation system 10. FIG. 4, for example, is a schematic diagram 120 of the various levels of computing associated with an example industrial automation system 10. The hierarchical levels, in which the industrial automation system 10 may operate, include a field network level 122 (e.g., level 0), a control network level 124 (e.g., level 1), a supervisory network level 126 (e.g., level 2), an operational and control network level 128 (e.g., level 3), and an enterprise network level 130 (e.g., level 4). Different control systems, controllers, software applications, devices, and computing systems may operate with each other within an enterprise to enable organizations to effectively control operations of components in the industrial automation system 10. For example, the physical process in which industrial components (e.g., machines) are employed to physically modify raw materials may be part of the physical process level, which may be controlled or monitored by components in an intelligent device level. The intelligent device level may include sensors, analyzers, actuators, and other instrumentation that may sense and manipulate the physical process. The industrial components at both the physical process level and the intelligent device level may be a part of the field network level 122. The field network level 122 involves the actual production process of transforming raw materials (e.g., grains, wheat) into products (e.g., cereal) as well as sensing and manipulating the production process within the industrial automation system 10 (e.g., food manufacturing plant). Containers deployed to the field network level 122 may be executed by local controller circuitry of respective sensors, actuators, OT device, or the like. It is noted that devices in higher network levels may be able to access data in lower network levels.

The control network level 124 may be positioned at a higher hierarchical level with respect to field network level 122. The control network level 124 may include controllers to provide supervising, monitoring, and controlling operations (e.g., continuous control, discrete control) for the physical process associated with the industrial components. When a container 132 is unable to be deployed to the field network level 122, sometimes the container 132 is deployed to a device in the control network level 124, which may be considered an edge device. The edge device running the container 132 may acquire data produced by devices, sensors, actuators in the field network level 122 and perform processing according to instructions associated with the container 132.

The supervisory network level 126 may be positioned at a higher hierarchical level with respect to the control network level 124 that regulates the controllers of the control network level 124. By way of example, the supervisory network level 126 may include real-time control hardware and software, HMI, programmable logic controller (PLC), supervisory and data acquisition (SCADA) software, and the like. The PLC may be an industrial solid-state computer that monitors inputs and outputs of the industrial automation system 10 and makes logic-based decisions for automated processes of the industrial automation system 10. Further, the SCADA may analyze real or near real-time data from industrial components and subsequently control the industrial components. Containers deployed to the supervisory network level 126 may have access to data acquired or generated by container 132 or devices in lower levels (e.g., field network level 122, control network level 124).

The operational and control network level 128 may be positioned at a higher hierarchal level with respect to the supervisory network level 126. The operational and control network level 128 may include manufacturing application system, which may any suitable IoT system that supports manufacturing processes. In some embodiments, the manufacturing application system may include manufacturing execution system (MES) or a manufacturing operations management (MOM) that manage production workflow to produce the desired products, batch management, laboratory, maintenance and plant performance management systems, data historians, related middleware, and the like. The MES and MOM may involve monitoring data with respect to various time frames, such as duration of communication between components, minutes, seconds, and the like. Containers deployed to the operational and control network level 128 may have access to data acquired or generated by container 132 or devices in lower levels (e.g., field network level 122, control network level 124, supervisory network level 126).

In particular, the MES may include a number of software and hardware components that operate together to monitor the operations of the various components (e.g., databases, servers, devices) that are used to perform the manufacturing operations. The infrastructure of the manufacturing applications system may include the software and hardware components that control the distribution of data and information between various components in the manufacturing application system level and other levels discussed above. By way of example, the components of the manufacturing application system may include a server, a database, a database server, an application server, network controllers, routers, interfaces, and the like. In addition, the components of the manufacturing application system may include software applications and processes that operate to control the flow of data and information between the various components employed by the manufacturing applications systems.

Positioned above the operational and control network level 128, the enterprise network level 130 may manage business-related activities of the manufacturing operation. The enterprise network level 130 may correspond to domain 98. In some cases, the enterprise network level 130 may establish production schedule, material use, shipping, and inventory levels to support the operations monitored by the components (e.g., databases, servers) in the operational and control network level 128. The enterprise network level 130 may also include application servers, web servers, data servers, security information and event management (SIEM), and other enterprise devices. Containers deployed to the enterprise network level 130 may have access to data acquired or generated by container 132 or devices in lower levels.

Devices in each of these levels may correspond to different hierarchical locations within the device hierarchy. Hierarchical locations may be generally arranged based on the levels. A hierarchical location of a device may indicate the physical or logical placement of the device within the industrial automation system 10 device hierarchy (e.g., represented via schematic diagram 120). When designing and/or managing control operations within the industrial automation system 10, the hierarchical locations may be considered since the hierarchical locations may impact latency, communication speeds, and/or power consumption.

As mentioned above, a container 132 deployed in the industrial automation system 10 may be a data collecting (e.g., data acquisition) process that monitors for specific data produced by one or more devices for a threshold duration of time or quantity of data, may perform one or more operations based on computer-implemented instructions associated or contained within the infrastructure of the container 132, or the like. Once a threshold amount of data is gathered or a threshold amount of time has been reached, or data is received from a data source, the container 132 may commence processing, analysis, and/or transmission of the data to be sent to a different device in a same or different level. In this way, some container 132 may be non-perpetual operations that have distinct start and end times. When a container 132 completes its operation, it is terminated and no further computing resources or memory are dedicated to that container 132 at the deployed device.

Deploying the one or more containers 132 may be based on a trigger event, such as receiving scheduling metadata, receiving a command from an industrial automation device, or detecting a device being commissioned in the industrial automation system 10, or the like. These examples and others are described herein. However, it should be understood that other deployment conditions or considerations may be used when determining whether to deploy a container 132 to another device in the hierarchy.

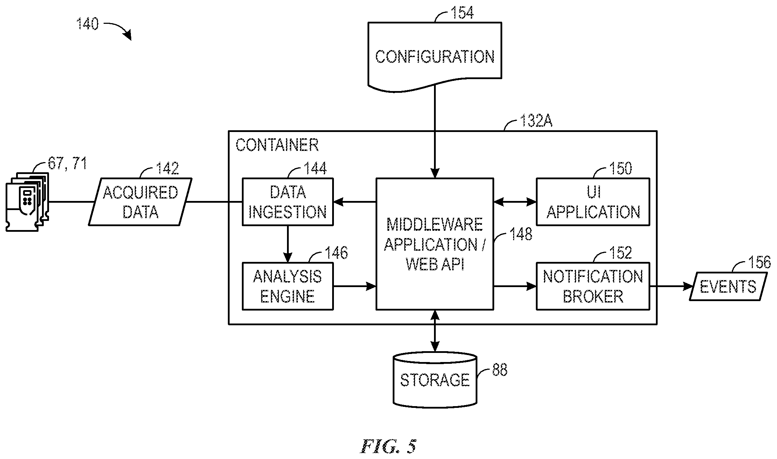

FIG. 5 is a diagrammatic representation of a container-based model predictive control (MPC) system 140 (e.g., a container-based monitoring application) deployed in one or more of the systems depicted in FIG. 3 and/or FIG. 4. Indeed, the MPC system 140 may be included in a container 132A, such as part of one of the containers 132 of FIG. 4 deployed in a suitable hierarchical level. In some cases, the MPC system 140 is an application accessible via the platform 108. In some cases, the MPC system 140 may be accessible via a management framework application provided via a cloud provider as part of a software offering.

The MPC system 140 may obtain data from the industrial automation system 10, such as data 142 acquired from or related to OT devices 67, 71, IT devices, or other assets of the industrial automation system 10. The MPC system 140 may predict anomalies in an operation of the industrial automation system 10 based on the obtained data and an analysis operation. The analysis operation may involve one or more device models corresponding to the asset associated with the obtained data. When such an anomalous operation is detected, the MPC system 140 may generate a notification and/or data indicative of the detected operation (e.g., one or more event(s) 156). The one or more events 156 may correspond to an alarm and/or indicate an alarm status (e.g., "alarm" state, "normal" state, "off" state), or the like. The notification may include a link to a graphical user interface to acknowledge the detection and/or label the detected anomalous operation as deemed appropriate.

To elaborate, various systems implemented via the MPC system 140 are described below. In one example, all functionality (except the storage 88) is intended to be hosted in a single container. However, it should be understood that in other systems it may be desired to host one or more portions or operations of the MPC system 140 in different containers, in one or more containers, in a combination of container-based operations and non-container operations, or the like. Benefits of using one container to deploy the MPC system 140 may be the ability to selectively use computing resources for the monitoring operation and to terminate the MPC system 140, freeing up the computing resources, once the monitoring operation ends or is idle. Other technical effects from using the container-based MPC system 140 may be described and relied upon herein.

The MPC system 140 may include a data ingestion component 144, an analysis engine 146, a middleware application 148 (that may enable a web-based API), a user-interface (UI) application 150, a notification broker 152, or the like. It should be understood that alternative, fewer, or additional systems or applications may be associated with the MPC system 140. The data ingestion component 144, the analysis engine 146, the middleware application 148, the UI application 150, and/or the notification broker 152 may correspond to separate processes built as respective binary or associated with respective instructions executable to perform the operations described herein. In this way, the respective processes may not be built into separate containers in some systems.

The middleware application 148 may receive a configuration 154. The configuration 154 may be a file provided to the container 132A providing the MPC system 140 via environmental variables. The middleware application 148 may read the configuration 154 via the web-based API, where the configuration 154 is passed in via environment variables. The middleware application 148 may write data of the configuration 154 to a database of the storage 88, as well as may initialize its various subcomponents based on the data of the configuration 154. The middleware application 148 may also operate as a data controller to aid in abstracting other components based on configurations and/or data accessible in the storage 88.

The data ingestion component 144 may receive the acquired data 142 from target automation devices, such as OT devices 67, 71. Once received, the data ingestion component 144 may format the acquired data 142 to meet protocol or formatting configurations of the middleware application 148 and/or the analysis engine 146. It is noted that the container 132A may be deployed to the edge gateway 82. Thus, the data ingestion component 144 may perform data processing operations on behalf of the edge gateway 82 for preparing the acquired data 142 into a protocol or format able to be handled by computing devices of domain 100.

Analytics operations performed by the middleware application 148 and/or the analysis engine 146 may use relatively high-speed data (e.g., greater than threshold) from target assets, such as OT devices 67, 71. The high-speed data may correspond to like trend data obtained at a sensing frequency greater than or equal to a threshold frequency of sensing. In some cases, the MPC system 140 may receive the data from one or more containers 132 deployed at compute surfaces of the target assets and/or in proximity to the target assets (e.g., deployed as close to the target asset as permitted or suitable). In some cases, the data ingestion component 144 may configure one or more common industrial protocol (CIP) objects at one or more target automation device, such as test points, to facilitate the collection of the data, where may be obtained at speeds higher when acquired closer to the target asset. In this way, high-speed trend data may be obtained at the target automation device.

The analysis engine 146 may receive ingested data from the data ingestion component 144 (e.g., the processed acquired data 142 output from the data ingestion component). The analysis engine 146 may perform one or more data manipulation operations on the ingested data. The data manipulation operations may include one or more normalization operations, filtering operations, sorting operations, sampling operations, splitting operations, or the like. Once processed, algorithmic logic of the analysis engine 146 may perform analytic operations based on the processed data to detect whether one or more anomalies are present in an operation or the target automation device. The algorithmic logic may be packaged as a library and may perform one or more machine learning-based operations on the processed data. In this way, processing to the ingested data performed by the analysis engine 146 may correspond to machine learning preprocessing operations. The machine learning preprocessing operations may include data cleaning operations, feature selection operations, feature scaling operations, data transformation operations, encoding operations, or the like. Indeed, any suitable analytic operation and/or processing operation may be performed via the analysis engine 146.

In some cases, the analysis engine 146 may train a device model to indicate a baseline operation of an asset while in a process state. Since the asset may operate in multiple process states, the asset may correspond to multiple device models respectively indicating the baseline operation of the asset in the multiple process states. The baseline operation may correspond to a normal operation that has come to be an expected operation through repeated training and/or monitoring over time, where a number of repeated training may correspond to "training iterations" in FIG. 13. When the asset is a motor, such as a motor driven by an adjustable speed motor drive corresponding to a pump, fan, blower, or the like, the asset may operate in a process state based on what material is being handled by the asset and operation of the asset may change based on a speed at which that material is handled, which may change an amount of torque or other parameter affecting the asset. A respective device model trained and accessed by the analysis engine 146 may correspond to a respective process state and a respective operational parameter (e.g., speed). As will be appreciated, the MPC system 140 may, via the analysis engine 146, determine which device model to access (e.g., when monitoring an asset based on the device mode, when training a device model for the asset) based on determining in which process state and at which speed a target asset is currently operated. This determination may be based on acquired data that may be used by the MPC system 140 to determine what material is being handled by an asset and at what speed, enabling the corresponding device model to be read from memory.

With this in mind, device models of an asset may correspond to any suitable indication of an expected operation for that asset. In some cases, a device model may indicate an expected voltage signal over time, an expected torque over time, an expected current over time, or the like, where time may correspond to a time window. A device model may correspond to a look-up table of example sensor data at a specific time that may indicate normal operation. A device model may capture a signal or waveform that is indicative of a normal operation of that asset which in a corresponding process state and label that signal or waveform as an expected operation. Multiple signals or waveforms over time may be acquired and processed to generate an indication of an expected operation of the asset, such as a mean, a mode, or a median of the signals or waveforms. Any suitable relationship may be indicated and used to train the device model. For example, a Hanning window or other Fourier transform may be used to process acquired data before training the device model.

The UI application 150 may correspond to a "runtime" interface. The interface provided by the UI application 150 may enable a computing device of FIG. 3 to present a graphical user interface (GUI). The GUI may enable configuration of assets and drives to be monitored (e.g., as a target automation device), labeling and/or classifying of a detected anomalous operation, management of various aspects or configurations referenced by the MPC system 140, or the like. Furthermore, the notification broker 152 may generate and send one or more notifications to the GUI to indicate a detected anomalous operation via a visualization. Other methods may be used to notify via the notification broker 152 in response to an event 156 notification.

To elaborate, the notification broker 152 may be responsible for processing various events 156 generated in the MPC system 140 and then generating one or more events 156 based on indications of rules stored in the storage 88. An event 156 may include an amount of data less than an amount of data received as the acquired data 142. The notification broker 152 may transmit one or more events 156 to one or more computing devices (e.g., associated with the domain 98, associated with the industrial automation system 10) based on one or more indications of user profiles. Rules may associate a computing device to an indicated delivery method of notification. For example, a respective rule may indicate a relationship between a client device, a user profile, a system, a type of device, a computing device, or the like, and between a type of delivery method by which to send the notification. When the MPC system 140 is disposed in the cloud and/or provided by the computing device 76, the notifications may be sent by the notification broker 152 via electronic mail, text message, and/or another messaging application. When the MPC system 140 is provided by the computing device 74 and/or is accessed by a device without internet, the notifications may be sent by the notification broker 152 via a user-definable type (UDT), which may be mapped to one or more HMIs, alarms, control system operations, or the like. In this way, a computing device without internet connection may be sent event 156 notifications from the MPC system 140 based on the notification broker 152 writing the event 156 to the UDT as opposed to receiving the event 156 via an Internet-enabled connection or cloud-based connection. It is noted that the UDT may be used to provide a standard structure to write data to and read data from.

Although shown in FIG. 5 as corresponding to one MPC system 140, it should be understood that a single notification broker 152 may support multiple analysis engines and/or MPC systems 140. Indeed, the notification broker 152 and/or the storage 88 may be shared by one or more MPC systems 140, one or more containers 132, or the like. Furthermore, the one or more MPC systems 140, the one or more containers 132, and the like may be optionally operated on or executed on separate hardware. In one example, a computing device 74 may browse via an internet-enabled browsing operation to link to a reverse proxy and/or load balancer, which may be based on the middleware application 148. The reverse proxy and/or load balancer may communicatively couple to a scaled out UI involving two or more UI applications 150. The UI applications may respectively couple to the storage 88. Based on data provided from the different UI applications 150, separate data ingestion and analysis operations may occur based on separate instantiations on the data ingestion component 144 and the analysis engine 146. In this way, multiple MPC systems 140 may be scaled to support different parallel analysis operations while sharing some functionality among the various scaled systems. The separated data ingestion and analysis operations may correspond to respective device collections (e.g., one or more OT devices 67, 71 that may or may not overlap in groupings) and share a notification broker 152 responsible for communicating events 156 back to the computing device 74. In this way, different UI applications 150 may enable different configurations and/or data to affect separate data ingestion and analysis operations, which may share a notification broker 152 and storage 88. It is noted that the storage 88 in this example may be considered a shared storage and state manager, which may be written to by the various analysis engines 146 and read from by the notification broker 152 to coordinate the generation of the events 156 based on the different analysis results. As mentioned above, the notification broker 152 may provide notification via electronic mail, text message, or the like to one or more computing devices associated with the industrial automation system 10 and/or the domain 98.

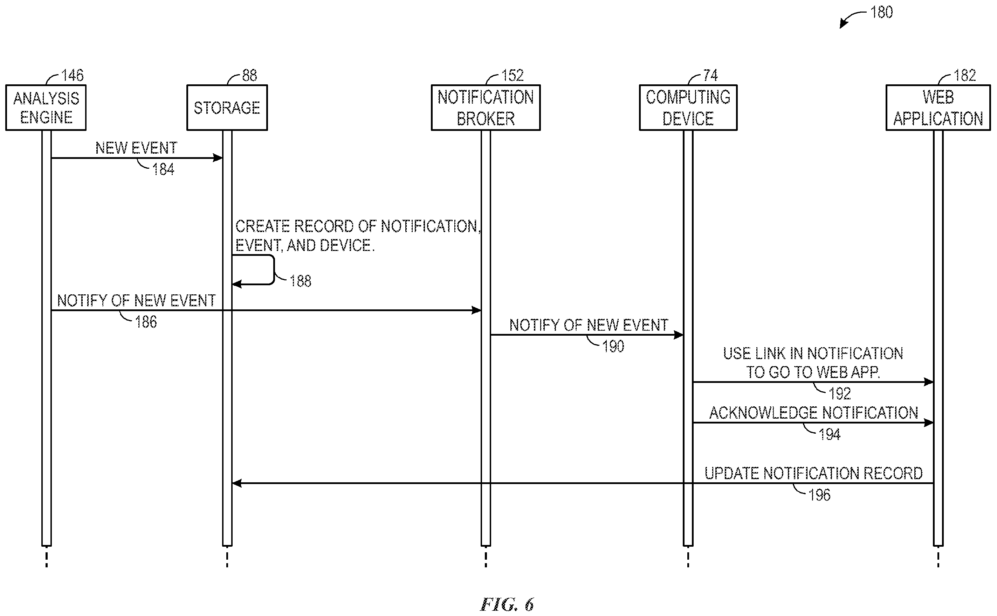

To aid in visualization of operations of MPC system 140, an example notification sequence is illustrated in FIG. 6. FIG. 6 is a sequence diagram 180 illustrating the MPC system 140 detecting and generating an event 156. Operations illustrated in the sequence diagram 180 are associated with the analysis engine 146, the storage 88, the notification broker 152, the computing device 74, and a web-based application 182. It is noted that the sequence diagram 180 may not represent an exhaustive indication of described herein or able to be performed by the industrial automation system 10 based on and/or in conjunction with the MPC system 140.

With keeping descriptions of FIGS. 5-6 in mind, at operation 184, the analysis engine 146 may transmit an indication of a new event to the storage 88, which stores (at operation 188) the indication of the new event as a record. The indication of the new event may include metadata, such as an indication of a notification, asset identifier, device identifier, device type, a timestamp or the like, and thus the record in storage 88 may include some or all of the metadata. The analysis engine 146 may also transmit the indication of the new event at operation 186 to the notification broker 152. The notification broker 152 may notify, at operation 190, the computing device 74 in response to receiving the indication of the new event from the analysis engine 146. The notification broker 152 may notify the computing device 74 based on its indicated preference as the event 156. The notification broker 152 may adjust the notification method based on the metadata transmitted with the indication at operation 186. Once notified, the computing device 74 may, at operation 192, use a link in the notification from the notification broker 152 to navigate to the web-based application 182. In the web-based application 182, the computing device 74 may, at operation 194, transmit an input acknowledging the notification from the notification broker 152. Once acknowledged, the web-based application 182 may, at operation 196, update the notification record in the storage 88 that was previously generated at operation 188.

In some systems, operations of the storage 88, the notification broker 152, the computing device 74, and/or the web-based application 182 may occur at least partially in parallel, which may increase an efficiency and speed in which the computing device 74 is delivered the notification of the event. For example, operations 184 and 188 may be at least partially performed in parallel to operations 186, 190, 192, and/or 194.

In some systems, each detected anomaly by the analysis engine 146 may not trigger a new event at operation 184. The analysis engine 146 may perform additional monitoring rules and/or filtering operations before generating the new event at operation 184 in response to detecting the anomalous operation.

In the case that the computing device(s) 74 are not connected to the internet, notifications of operation 190 may be sent to a "application client" and/or a UDT, as described above. Furthermore, it is noted that these notification systems and methods may be used in combination with any suitable processing operation of the analysis engine 146 to identify and generate the indication of the new event at operation 184. For example, the analysis engine 146 may compare a baseline operation of an asset to a current operation of an asset to identify whether the asset is operating as expected or is anomalously operating. When the asset is deemed as anomalously operating, the analysis engine 146 may generate the indication of the new event at operation 184.

Keeping the foregoing in mind, systems and methods that improve analysis engine 146 monitoring operations are described herein. These systems and methods may use notification methods of FIG. 6 and/or the systems of FIG. 5 to detect anomalous operations.

To elaborate, some analysis and deviation detection operations may use machine learning operations. These machine learning operations may use a relatively long amount of learning time (e.g., greater than a desired threshold amount) to determine baselines and understand normal operating conditions of the asset and/or industrial automation system 10. These machine learning operations may use a dedicated training time period, as opposed to in situ training, and may be based on a controller identifying (or an another data source) define process states. The process state may correspond to a batch or material being processed. Using the dedicated training time period and/or receiving the indications of the process states of operation being monitored may be undesirable due to potential for process disruption, delays, or additional communication or infrastructure being used to perform training and analysis operations.

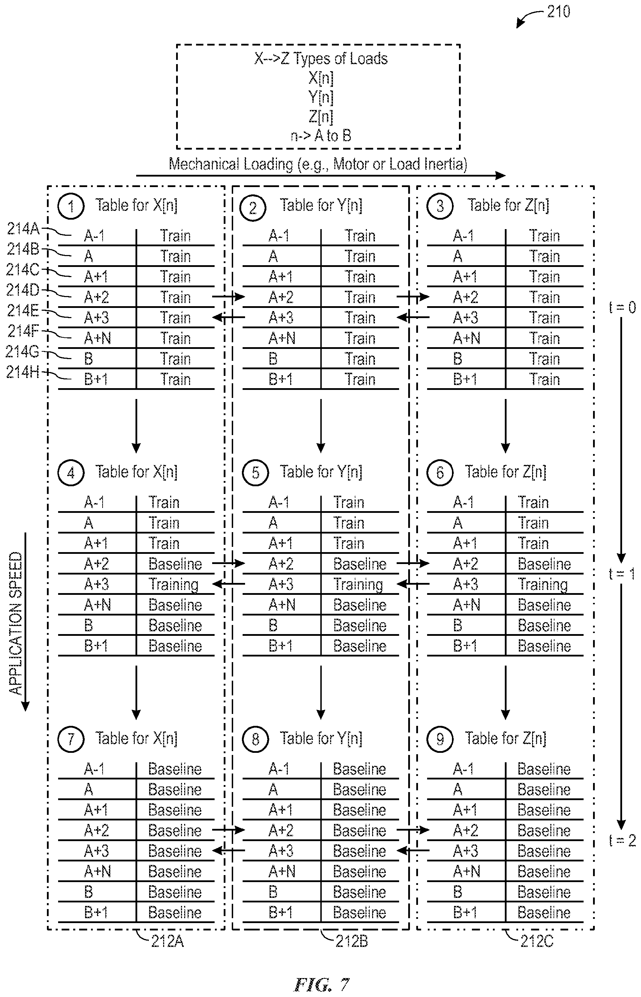

With this in mind, the systems and methods described with reference to FIG. 7 may be used with in situ training of a machine learning device model, where processes may not be disrupted for training. Furthermore, these systems and methods may not use an indication of a process state from the controller. These systems and methods may discern a process state based on sensed data at a time of training, making the methods suitable for monitoring of continuous processes as well as discrete/batch processes. Mechanical loading may be used to differentiate between process states. In some systems, an indication of a device configuration, like a motion profile, may be used to differentiate between process states. Indeed, mechanical loading may be a good differentiating operational parameter for some assets (e.g., pump moving different material viscosities, mover moving different types of loads), while an alternative operational parameter, like the device configuration, may be more suitable for other assets (e.g., mover moving same type of load).

To elaborate, FIG. 7 is a diagrammatic representation 210 of hierarchical indexes of an asset over time as training operations performed by the container-based MPC system 140 to train a device model of the asset, where the asset may be one or more OT devices 67, 71, or other suitable industrial device capable of being monitored based on data acquired related to its operation. Although described herein as related to one asset, it should be understood that similar hierarchical indexes may be used with sets of assets, such as associated together in a sub-system of the industrial automation system 10. Although described herein as related to two operational parameters (e.g., application speed and mechanical loading), it should be understood that some systems may use process state definitions that span three or more operational parameters.

Hierarchical indexes associated with the asset may be stored in the storage 88 or another suitable memory. The hierarchical indexes may indicate different operations or performances of the asset when in different process states 212 and when operated at different operational parameters 214. Each row of each table of the hierarchical indexes may correspond to a respective device model for the asset. The various respective device models may be trained based on in situ data associated with the asset to indicate a baseline or normal operation of the asset when operating in a respective process state 212 at a respective operational parameter 214. For example, trained device models are illustrated as being associated with a "baseline" indication in the hierarchical index.. Before any training occurs, device models are associated with a "train" indication in the hierarchical index. When the MPC system 140 (e.g., via the analysis engine 146) is training the device model, the device models are associated with a "training" indication in the hierarchical index. The MPC system 140 may change, via the analysis engine 146, the "training" indication to the "baseline" indication in response to a threshold amount of normal operation data has been received.

To elaborate, the hierarchical indexes may correspond to one or more process states 212 (process state 212A, process state 212B, process state 212C) and one or more operational parameters 214 (operational parameter 214A, operational parameter 214B, operational parameter 214C, operational parameter 214D, operational parameter 214E, operational parameter 214F, operational parameter 214G, operational parameter 214H). It is noted that the asset may, overtime, handle the one or more different loads in states 212 (corresponding to X, Y, Z) at one or more different operational parameters 214 (corresponding to an array of operational parameters, n -> A to B). For example, a pump at a first operational frequency (e.g., first operational parameter 214) to move a first load of a first viscosity or a first weight (e.g., first process state 212) may have a different operation than when it moves a second load having a second viscosity or a second weight (e.g., second process state 212) at the same first operational frequency (e.g., the first operational parameter 214). Operation may further differ when the pump is used to move the first load (e.g., first process state 212) at a second operational frequency (e.g., the second operational parameter 214). Thus, a combination of a respective process state and a respective operational parameter may be used to navigate the hierarchical index to access the device model. For example, when the asset is a motor, the respective process state 212 of the motor may correspond to a physical characteristic of a load (e.g., thick material being moved via the motor may be a physically heavier load relative to a thinner or more viscous material) and the respective operational parameter 214 that the motor is operated at may be a rotation per minute (RPM) parameter. As another example, when the asset is a mover, the respective process state 212 of the mover may correspond to a physical characteristic of a load (e.g., a weight of a load transported by the mover) and the respective operational parameter 214 that the mover is operated at may be a motor or load inertia parameter. As the operational parameter changes, the respective process state 212 referenced changes. As the respective process state 212 changes (e.g., when the load changes), the respective process state 212 space referenced changes.

Although described in terms of three loads, it should be understood that an asset may correspond to one or more states 212 and one or more operational parameters 214. For example, a pump may move four different substances (e.g., liquid A, liquid B, water, liquid C) corresponding to the different process states 212 (e.g., loads) and have four different pump signatures corresponding to the different substances, where for any one of the four different substances the pump may be operated at a different operating parameter corresponding to frequencies, and thus a lowest frequency (e.g., A-1), a middle frequency (e.g., A+2), or a highest frequency (e.g., B+1), or a frequency between those values (e.g., A, A+1, A+3, A+N, B).

Furthermore, although described herein as operational parameters 214, it should be understood that these values may refer to value ranges within a larger operational range. For example, a frequency A (e.g., operational parameter 214B) may refer to one frequency within an operating speed range, like 51.5 Hertz (Hz), or a range of frequencies within the operating speed range, like 51Hz through 52Hz, depending on the system. Any suitable range or values may be used as the operational parameters 214 by which to index the various device models.

By using systems and methods of FIGS. 7-8, a device model of an asset may be trained using data acquired in association with the asset operating at a normal operation in situ in the process. This may lead to various improvements in device behavior modeling, including increase speed of modeling, more accurate models since the modeling may occur within the real process, or the like. However, these performance improvements may be backdropped with quality control concerns of using in situ data gathering. Among the quality control concerns associated with the acquired data 142 is whether or not the data is acquired while an asset is at an operational steady state or while the operations of the asset are changing. Using data acquired while the asset is not at steady state may cause incorrect process state identification. Systems and methods described herein may determine whether an asset is in steady state based on the acquired data 142 and, when the asset is in steady state, proceed with process state identification based on the acquired data 142, such as described below with FIG. 8.

Keeping the foregoing in mind, FIG. 8 is a flow chart of a method 240 that the local control system (e.g., processor 44) of an OT device 67, 71 may perform as part of the training operations illustrated via FIG. 7 and/or detection operations. Although method 240 is described as being performed by the local control system (e.g., processor 44) of a respective OT device 67, 71, it should be understood that the MPC system 140 may be deployed to the local control system to facilitate or enable performance of some or all of the operations described herein. Furthermore, although one example local control system and respective OT device 67, 71 combination is described, it should be understood that these descriptions may apply to any suitable local control system and/or asset as used in an industrial automation system. In addition, although the method 240 is described in particular order, it should be understood that the method 240 may be performed in any suitable order and/or may include additional operations not described herein and/or exclude some of the operations described herein.

At block 244, the local control system may receive an indication of the acquired data 142. The local control system may determine than an OT device 67, 71 is in steady state based on analyzing a subset of the acquired data over a time period. The acquired data 142 may include first data acquired by one or more sensors and sensed relative to an operation of the OT device 67, 71. The acquired data 142 may include second data received from the industrial control system 12, where the second data may be used to control operation of the OT device 67, 71. The second data may be a device configuration and/or a motion profile according to which the local control system adjusts how the OT device 67, 71 operates. The local control system may receive the second data before having to operate the OT device 67, 71 according to the second data to permit suitable time to generate control signals based on the second data. The acquired data may include data generated by a sensor during a sensing operation. The sensor may be any suitable sensor used in industrial automation systems, for example pressure sensors, voltage sensors, current sensors, temperature sensors, motion sensors, image sensors (e.g., cameras), infrared sensors, audio sensors, or the like. The local control system may receive the indication of the acquired data 142 via the data ingestion component 144. The acquired data 142 may be received based on a common industrial protocol (CIP) path, an IP address, a device identifier, a user-defined type tag, any combination of these, or other suitable device identifying and/or data pathway identifying data. The local control system may receive the CIP path, IP address, device identifiers, or the like, from input(s) received via a graphical user interface, such as those shown in FIGS. 11-13, from accessing a memory, from the industrial automation system 10 (reported by the device itself or a corresponding control system) reporting the data, or the like. Thus, the acquired data 142 may indicate which of the one or more process states that the asset was operating in when the acquired data 142 was sensed or obtained. To determine that the OT device 67, 71 was in steady state when the data was acquired, the local control system may determine a minimum data value and a maximum data value of the acquired data during the time period. The local control system may compare a difference between the minimum data value and the maximum data value to a threshold range. When the difference is less than the threshold range, the local control system may determine that the OT device 67, 71 is in steady state. However, when the difference is greater than the threshold range, the local control system may determine that the OT device 67, 71 is not in steady state and may discard the acquired data and/or process the acquired data using alternative methods. In some cases, the local control system may determine that the OT device 67, 71 is operating in steady state by comparing second data (e.g., motion profiles, device configurations) over time to evaluate how variable operations have been and to determine whether the OT device 67, 71 is operating in relative steady state. With motion profiles, steady state may include the OT device 67, 71 moving or implementing motion while also including the moving or motion being consistent or repeated between respective time periods of monitoring.

For example, a local control system may determine whether a time period during which a position command for an asset has been steady (e.g., where respective data values have less than a target range of deviation between each other) exceeds a threshold time period. If so, then the local control system may determine that the asset is at steady state. Data obtained when the asset is not in steady state may not be used for process state identification. Another method may involve monitoring a variance parameter of the acquired data over time, which may itself trigger a flag when crossing a variance threshold and/or may be monitoring to trigger a flag when the variance in the variance parameter crosses a variance threshold. The control system may generate an indication via an operator interface (e.g., a human machine interface (HMI), to another control system or computing device upstream) to cause an operator to label states and/or fine tune steady state analysis if variance is too great for automatic processing. It is noted that variance of the acquired data may relate to an amount of data to be used to train a model on a baseline of an asset-the variance may proportionally correlate to an amount of data such that a greater the variance a greater the amount of data used in training.

When the OT device 67, 71 is determined to be in steady state, at block 246, the local control system may, via the analysis engine 146, determine a process state 212 from one or more process states 212 based on the acquired data 142. The acquired data 142 may indicate a respective application speed and mechanical loading (e.g., motor or load inertia). The combination of the application speed and mechanical loading may indicate to the local control system what process state 212 the OT device 67, 71 was operated in when the acquired data was obtained. In some cases, a motion profile of the acquired data 142 may correspond to a respective process state 212 and other data of the acquired data 142 may correspond to a respective speed (or other operational parameter with a range over which the local control system may operate the OT device 67, 71) to guide device model accessing at block 248.

Indeed, at block 248, the local control system may, via the analysis engine 146, access a device model of the process state 212 determined at block 246. The device model may be selected based on which of the operational parameters 214 corresponds to the acquired data 142. In this way, the local control system selects the device model based on the determined process state and the operational parameter indicated by the acquired data 142.

The selected device model corresponds to an indication of training status, such as an indication of "train," "training," or "baseline" from FIG. 7 (e.g., "baseline" indication). During training, the device model may be referred to as a training device model, or a device model associated with a "train" indication in memory as described relative to at least FIG. 7. Once trained, the device model may be considered a baselined device model. The baselined device model may indicate through one or more indications of sensed data, outputs, statuses, or the like, what an expected operation (e.g., normal operation) of that OT device 67, 71 in that process state at that operational parameter (e.g., application speed in FIG. 7). The baselined device model may be associated with a "baseline" indication in memory as described relative to at least FIG. 7.

To elaborate, at block 250, the local control system may, via the analysis engine 146, determine whether a training status of the selected device model indicates "baseline" or other suitable indication of training being completed. When the selected device model is not indicative of the baseline operation (e.g., "train" in FIG. 7) the acquired data 142 may be used by the local control system at block 252 to adjust the selected device model when the acquired data 142 indicates a normal operation of the asset. This may permit the selected device model to be trained while the asset remains in situ in the process and operating as intended in the process (e.g., not in a training mode).

Models built based on the acquired data 142 (e.g., acquired while an asset is in steady state) may be associated by the local control system with an indication of an associated asset and an indication of the process state that the asset was in when the data was acquired. Once a model is built and trained to a suitable threshold amount, the local control system may associate an indication of "baseline" with the model in memory to communicate that the model for that asset at that process state is trained and ready to be used in monitoring operations. The indication of "baseline" may be what the local control system is checking for at block 250 when determining whether the training status is indicative of baseline.

Returning to block 250, when the selected device model is indicative of the baseline operation (e.g., "baseline" in FIG. 7), the local control system may compare the acquired data 142 to an expected operation (e.g., baseline operation, normal operation) indicated by the device model at block 254. Based on the comparison, the local control system may determine whether the expected operation of the device model is represented by the acquired data 142. That is, whether the acquired data 142 is represented in the expected operation indicated in the device model. When the acquired data 142 corresponds to the expected operation, the local control system may not generate an event 156 and/or may send the acquired data 142 for additional processing, like additional validation. However, at block 256, when the acquired data 142 corresponds to an anomalous operation, the local control system may generate the event 156 notification via the notification broker 152. The event 156 may trigger a validation operation to occur to enable labeling of the anomalous operation to occur. Over time, the analysis engine 146 may update the device model used based on the labeling of one or more anomalous operations. In some cases, the local control system may generate and/or instruct the industrial control system 12 to generate a work order based on a difference between the expected operation and the operation indicated via the acquired data 142. The work order may communicate data used to identify the anomalous operation. The industrial control system 12 may instruct a remedial operation and/or maintenance operation via the work order. In some cases, the local control system may instruct the industrial control system to adjust an operation based on the anomalous operation, such as triggering an isolation or shutdown operation.

In some systems, the methods of FIG. 8 may be applied to continuous operational control. Continuous operation of a system may refer to the ability of certain industrial asset to continually operate to in different process states (e.g., moving different loads) without discrete state changes. For example, a pump may transfer fluids, gases, plastic pellets, or the like from one location to another and may encounter changes in load as a demand for the material changes and/or as the load within a process changes (e.g., substance in tank that changes over changes with process). In another example, a mover may transport different loads of the industrial automation system 10. As loads or motions configuration change, a process state of the mover may change without discrete indications of state changes.

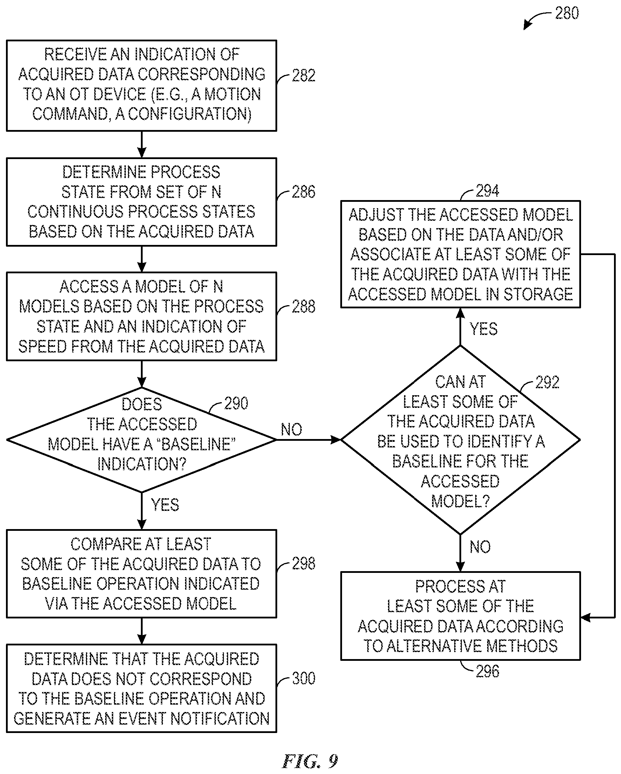

Furthermore, in some cases, the methods of FIG. 8 may be implemented by a local control system (e.g., processor 44) of an OT device 67, 71 disposed in field network level 0 (e.g., level 122) of FIG. 4, as opposed to being implemented by a higher level (e.g., control network level 1 level 124) industrial control system 12 of FIG. 4. These methods, as described further in FIG. 9, may use monitoring and analysis within the "four walls" of a respective OT device 67, 71 to identify operational baselines and perform monitoring operations based on the baselines. This may improve industrial automation system operations by permitting advanced analytics to occur at a field network level 0 as opposed to spending time and consuming computing resources to send data for upstream analysis via a device in a higher level.

As described below with FIG. 9, the local control system may receive the acquired data 142. The acquired data 142 may be gathered in parallel with an ongoing operation of the asset. The local control system may determine that the acquired data indicates the asset is in steady state (e.g., based on operations of blocks 244 and 246 of FIG. 8), identify a process state of the asset while the acquired data 142 was sensed, access a model that corresponds to the process state and the asset, and determine from the model whether the acquired data indicates a baseline operation when compared to data of the accessed model. When the acquired data indicates a deviation from the baseline operation, the local control system may operate the asset to annunciate a local alarm and/or an alarm via a distributed control system (DCS), which may trigger an update to an upstream graphical user interface (GUI) and/or other control operations to occur. For systems coupled to a cloud computing network, an edge device 80, 82 may detect the local alarm annunciation and send an indication of the local alarm upstream, such as to one or more computing devices of a domain 100 and/or a domain 98. The example of FIG. 9 describes a baseline training and monitoring operation that may executed within an asset housing via a local control system. Operations of FIG. 9 may occur automatically after installation within the industrial automation system 10, which may bypass receiving an indication from an operator to start the baseline training and monitoring. For example, the local control system may autonomously execute a baseline training and monitoring application from memory at start-up of its firmware. By performing baseline training and monitoring operations by the local control system of the asset, as opposed to using an external control system and/or externally acquired data, assets need not be connected to a cloud computing infrastructure. This may improve monitoring operations by enabling low-complexity and low-cost automated training and detection operations to be leveraged in a wider variety of industrial automation systems-industrial automation systems connected to cloud computing infrastructures, industrial automation systems not connected to cloud computing infrastructures, industrial automation systems isolated from non-enterprise computing infrastructures, and various systems in-between.

To elaborate, FIG. 9 is a flow chart of a method 280 that the local control system (e.g., processor 44) of an OT device 67, 71 may perform when applying the operations of FIG. 8 to an asset with continuous operations between process states (e.g., pump, blower, fan, mover). Although the following description of the method 280 is described as being performed by the local control system (e.g., processor 44) of a respective OT device 67, 71, it should be understood that the MPC system 140 may be deployed to the local control system to facilitate or enable performance of some or all of the operations described herein. Furthermore, although one example local control system and respective OT device 67, 71 combination is described, it should be understood that these descriptions may apply to any suitable local control system and/or asset as used in an industrial automation system. In addition, although the method 280 is described in particular order, it should be understood that the method 280 may be performed in any suitable order and/or may include additional operations not described herein and/or exclude some of the operations described herein.

At block 282, the local control system may receive an indication of acquired data 142. The acquired data 142 may correspond to a motion command generated to control an asset. The acquired data 142 may correspond to a configuration to be applied to the asset. For example, the acquired data 142 may include data indicative of a state 212 and operating parameter 214, such as data relating to an operating speed or frequency of the asset, an indication of mechanical loading, induced torque, line frequency, line voltages, a motion command, a control signal that instructs a mover to accelerate and decelerate at particular time intervals, load inertia, or the like. The acquired data 142 may enable the local control system to determine which of a set of possible process states are at that time being implemented by the asset, as well as determine which of a set of device models to use to evaluate whether the operation represented by the data is normal.

In some systems, the local control system may determine that the acquired data 142 indicates the asset is in steady state before continuing to block 286. Operations performed to do so may be similar or the same as operations of blocks 244 of FIG. 8. The local control system may determine a process state from a set of process states based on the acquired data 142. The local control system may access an indication of a set of process states. The set of process states may include one or more continuous process states. Any number of process states may be associated with the asset and each process state may refer to a respective state within a continuous process, where the asset may switch between the various process states as materials handled by the asset and/or motion commands sent to the asset are changed. For example, pump may be used in a process where the pump may move any one of six materials (e.g., N=6 states). As another example, a mover may operate in response to different motion commands as the different materials are moved at different speeds with different torques. The local control system may determine which of the process states that the asset is operating in based on the acquired data 142. Indeed, the local control system may identify a process state of the set of process states without a process state indication from the industrial control system 12. For example, since each of the six materials may cause the pump to operate according to a different torque-speed characteristic curve, and the local control system may identify a respective process state 212 based on which respective torque-speed characteristic curve is indicated via the acquired data 142. The different process states 212 may respectively correspond to different torque values, torque ranges, load inertia, motion commands, or other indications. The local control system may bypass specifically identifying a load when the acquired data 142 suitably indicates the process state 212 from N process states 212, which may increase a speed of identifying the process state 212 and enable monitoring to occur relatively seamlessly between loads being processed without a discrete end or transition between a load processed by the asset being identified. Any suitable relationship between acquired data and different load conditions may be used to identify which material is being processed by the asset, and thus which state 212 the asset is operating according.

At block 288, the local control system may access a device model of N device models corresponds to the state 212 and an operating parameter 214 indicated by the acquired data 142. For adjustable speed drive systems, the operating parameter 214 may be application speed, and thus may be an indication of frequency or rotations per minute (RPM) at which the drive system is operated. The N device models may be stored in storage 88 and correspond to a hierarchical index of device models corresponding to the asset illustrated in FIG. 7. The local control system may compare one or more values of the acquired data to one or more of the operating parameters 214 to identify between which or at which of the operating parameters the asset was operated at when the data was acquired. The device model may be accessed that corresponds to the combination of operating parameter 214 identified from the comparison and the identified process state.

At block 290, the local control system may determine whether the accessed device model has a "baseline" indication. When the device model is still being trained, the device model has a "training" indication. Once the device model is trained, the device model has a "baseline" indication. This is visually depicted in FIG. 7 and is described further below. The device model may be indicated as trained after the local control system receives a threshold amount of normal operation acquired data and the local control system may change the indication to "baseline" indication from "train" or "training." Training may occur by the local control system on an ongoing basis, after a suitable amount of data is ready for training, or a combination of the two approaches. After, at block 292, the local control system determines that the acquired data 142 can be used to identify a baseline operation for that state 212, the local control system may, at block 294, associate the acquired data with a device model being trained. Once associated, the accessed device model may be adjusted based on the acquired data 142, at block 294, and/or at least some of the acquired data 142 may be stored in association with the accessed device model for training at a later time once a threshold amount of data has been stored. Since the accessed device model is not in "baseline" yet, the accessed device model may not be used for anomaly analysis. Thus, the acquired data 142 may be additionally processed, at block 296, as part of control operations to further control or monitor the asset. After block 296, the operations of the method 280 may be repeated with additional acquired data as respective device models of the asset are trained over time.

Referring back to block 290, when the accessed device model corresponds to a "baseline" indication, the local control system may, at block 298, compare at least some of the acquired data to a baseline operation indicated via the accessed device model. The accessed device model having the "baseline" indication may indicate a normal operation of the asset while operated in the determined state 212 at the respective operating parameter 214. Based on the comparison of block 298, the local control system may, at block 300, determine whether or not the acquired data 142 corresponds to the baseline operation identified at block 290. When the acquired data 142 does not correspond to the baseline operation, the local control system may generate an event 156 notification via the notification broker 152, such as described above with reference to FIGS. 5-6. In some systems, operations of block 300 may include the local control system determining that the deviation between the baseline operation and the current operation indicates an alarm status associated with the asset. identifying an adjustment to remedy the alarm status, and based on the identified adjustment, transmitting one or more control signals to implement the adjustment and/or generating an instruction in the event 156 notification to instruct the industrial control system 12 to generate the one or more control signals to implement the adjustment.

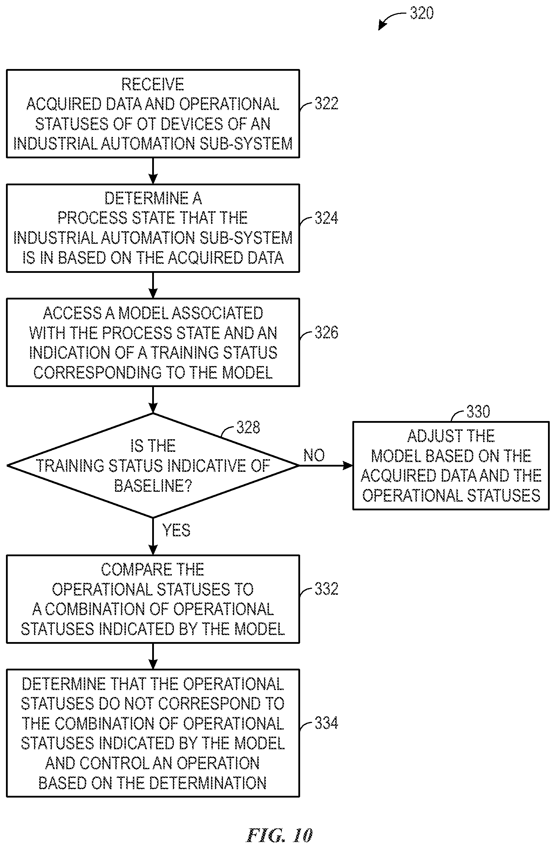

In some systems, such as described below with FIG. 10, an external control system may perform its own baseline training and monitoring operation related to the operation of more than one asset. The external control system may be the industrial control system 12 that controls operations of one or more assets via local control systems of the one or more assets. Multiple assets may form a sub-system of the industrial automation system 10. Data acquired related to the multiple assets may indicate a process state of the sub-system. When a model is trained for the sub-system and the process state, the industrial control system 12 can later reference the trained model when determining whether acquired data of a current operation indicates a baseline operation of the sub-system.

To elaborate, FIG. 10 is a flow chart of a method 320 used by the industrial control system 12 to perform baseline building and ongoing monitoring of multiple assets (e.g., "outside the four walls" of the asset). Although method 320 is described as being performed by the industrial control system 12, it should be understood that any suitable computing device may perform some or all of the operations described herein. In addition, although the method 320 is described in particular order, it should be understood that the method 320 may be performed in any suitable order.

At block 322, the industrial control system 12 may receive acquired data 142 and operational statutes of one or more OT devices 67, 71 of a sub-system of the industrial automation system 10. The acquired data may include data generated by a sensor during a sensing operation. The sensor may be any suitable sensor used in industrial automation systems, for example pressure sensors, voltage sensors, current sensors, temperature sensors, motion sensors, image sensors (e.g., cameras), infrared sensors, audio sensors, or the like. The sub-system may correspond to a unit, or a portion of the industrial automation system 10.

At block 324, the industrial control system 12 may determine a process state that the sub-system is in based on the acquired data 142, such as by comparing the acquired data 142 to a hierarchical index of the sub-system, like that of FIG. 7. The industrial control system 12 may determine which of the process states that the sub-system is operating in based on the acquired data 142. The acquired data 142 may be sensed data, configuration data, indications of commands, or the like that describe an operation of the sub-system at a time when the acquired data 142 was obtained. Any suitable relationship between acquired data and different load conditions may be used to identify which process state is being implemented by the sub-system, and thus which state 212 sub-system is operating according.

The sub-system may be an associated set of one or more OT devices 67, 71, and thus a process state of the sub-system may correspond to a collective process state that the one or more OT devices 67, 71 together implement. The process state of the sub-system may include one or more OT devices 67, 71 actively operating or being turned off. Thus, an indication of a lack of operation may itself be an indication contributing to a respective process state of the sub-system. For example, when the sub-system is a conveyor system, one or more OT devices 67, 71 may move and some OT devices 67, 71 may be turned off, where a combination of OT devices 67, 71 moving and being turned off may correspond to a respective process state identifiable based on acquired data 142. Continuing with this example, the acquired data 142 for the conveyor system may include sensed data of a load inertia on one or more conveyor mechanical components, configuration data for one or more movers, sensed data of an ambient temperature, or the like which together may be associated with a process state of the sub-system (e.g., process state of moving load A).

At block 326, the industrial control system 12 may access a model associated with the process state determined at block 324. The industrial control system 12 may access an indication of a training status corresponding to the model. The industrial control system 12 may access the indication and the model based on a query of storage. The model accessed may include an indication of a baseline operation for that sub-system. The baseline operation may correspond to a normal operation of the one or more OT devices 67, 71 while related in the sub-system.

At block 328, the industrial control system 12 may determine whether the training status indicates that the model is representative of a baseline operation of that sub-system. Similar as for device models, a model of the sub-system may be associated with training status indications. When the model is still being trained, the model may be associated in memory with a "training" indication. Once the model is trained, it may be associated in memory with a "baseline" indication. The model may be considered trained based on the model being adjusted by the industrial control system 12 using a threshold amount of normal operation acquired data 142 indicative of sub-system operation. Training of the sub-system model may occur by the industrial control system 12 on an ongoing basis, after a suitable amount of data is ready for training, or a combination of the two approaches. Thus, at block 328, the industrial control system 12 may determine whether the training status of the model is at training or baseline. When the model is indicative of training, the industrial control system 12 may perform operations of blocks 332-334. When the model is indicative of baseline, the industrial control system 12 may perform operations of block 330.

To elaborate, when the industrial control system 12 determines that the training status does not indicate the baseline operation (e.g., indicates that training is ongoing), at block 330, the industrial control system 12 may adjust the model based on the acquired data 142 and the operational statuses. These operations may involve determining whether at least some of the acquired data 142 may be used to identify a baseline for the device model accessed at block 326. In other words, the industrial control system 12 may determine whether the acquired data 142 can be used to train the device model further. When the industrial control system 12 determines that the acquired data 142 can be used to train the model further, the industrial control system 12 may adjust the accessed device model based on the acquired data 142 and/or associate the at least some of the acquired data 142 with the accessed device model in storage. Training operations performed may adjust the model based on the acquired data 142 using any suitable machine learning or computational operations. The adjustment performed may be similar to those described above relative to block 252 of FIG. 8. After adjustment of the model and/or when the industrial control system 12 determines that the acquired data 142 cannot be used to train the model further, the industrial control system 12 may process at least some of the acquired data 142 according to alternative methods. The operations performed at block 334 may be similar to those performed at block 296. Thus, the acquired data 142 may be additionally processed, at block 334, as part of control operations to further control or monitor the asset. The operations of the method 320 may be repeated with additional acquired data as respective device models of the asset are trained over time.

Returning to block 328, when the industrial control system 12 determines that the training status does indicate baseline (e.g., indicates that training is completed), at block 332, the industrial control system 12 may compare the operational statuses to a combination of operational statuses indicated by the model. The model, once trained, may indicate a combination of operational statuses that correspond to a normal operation of the sub-system. By comparing the operational statutes (e.g., actual statuses) to the operational statuses in the model (e.g., target combination of statuses), the industrial control system 12 may identify whether the current operation of the sub-system is normal or not. When operation is normal, the industrial control system 12 may stop analysis and the operations of the method 320 may be repeated with additional acquired data as respective device models of the asset are trained over time.

However, when the operation is not normal, or differs from baseline of model by a threshold amount, the industrial control system 12 may, at block 334, determine that the operational statuses do not correspond to the combination of operational statuses indicated by the model and may control an operation based on the determination. The industrial control system 12 may control an operation of the sub-system based on the determination. For example, the industrial control system 12 may determine one or more adjustments to make to operation of the sub-system based on the difference between the actual statuses and the target combination of statuses. The industrial control system 12 may implement the adjustment by controlling one or more operations of OT devices 67, 71 of the sub-system. The industrial control system 12 may generate an alert when a threshold number of OT devices are operating anomalously relative to the target combination of statuses. The industrial control system 12 may predict overall system health based on a combination of OT devices 67, 71 operating differently relative to the baseline of the model.

Based on the operations of FIGS. 8, 9, and/or 10, an asset (e.g., OT device 67, 71) may be flagged for maintenance or replacement. When flagged, the asset may be operated in an automated control mode, where its specific operations are controlled by its local control system based on ongoing process conditions, such as part of a feedback loop. When an asset undergoes the maintenance or replacement it was flagged for, the asset may be operated from an automated control mode into a commissioning mode. The commissioning mode may disconnect the asset from the process and enable verification of operations of the asset without disruption to the process its placed within. For example, the asset may be ramped up and down among its full scale of possible speeds or outputs while in the commissioning mode to verify its operating as expected. Data acquired by a local control system and/or the industrial control system 12 while the asset is in the commissioning mode may correspond to the calibration or other preparatory operations. Indeed, once the asset is connected fully (e.g., no longer locked-out, tagged-out (LOTO)) to the industrial automation system 10 processes, the commissioning mode may be turned off and the asset returned to its automated operation. Since data from the commissioning may not indicate a true operation of the asset within the process of the industrial automation system 10, the data associated with the commissioning may not be desired to be used for baseline training of the model. Thus, it may be desired for the local control system to discard or ignore data acquired during the commissioning mode. In some systems, baseline training and monitoring may be disabled until exiting from a commissioning mode.

To elaborate, FIG. 11 is a flow chart of a method 350 used by a local control system of an asset to identify when the asset is operated in a commissioning mode and to not use data acquired while the asset is in the commissioning mode for training of or comparison to the model. Although the following description of the method 350 is described as being performed by the local control system (e.g., processor 44) of a respective OT device 67, 71, it should be understood that the MPC system 140 may be deployed to the local control system to facilitate or enable performance of some or all of the operations described herein. In addition, although the method 350 is described in particular order, it should be understood that the method 350 may be performed in any suitable order.

At block 352, the local control system may receive an indication of an OT device 67, 71 entering a commissioning mode. The commissioning mode may be used while calibrating the OT device 67, 71 and/or otherwise confirming that the OT device 67, 71 is ready to be fully connected into the industrial automation system 10. The commissioning mode may be used when installing the OT device 67, 71 in the industrial automation system 10. The indication may be received via an input interface associated with the OT device 67, 71, such as a physical button, a button visualization on an HMI, or the like. The indication of entering the commissioning mode may be transmitted to the local control system in response to the OT device 67, 71 being powered on after a repair or replacement. The indication of entering the commissioning mode may be transmitted to the local control system as part of a lockout, tagout operation to isolate the asset from the industrial automation system 10 before powering off the OT device 67, 71 to perform the repair.

At block 354, the local control system may receive first acquired data 142 corresponding to the OT device 67, 71. The acquired data may include data generated by a sensor during a sensing operation. The sensor may be any suitable sensor used in industrial automation systems, for example pressure sensors, voltage sensors, current sensors, temperature sensors, motion sensors, image sensors (e.g., cameras), infrared sensors, audio sensors, or the like. Indeed, the first acquired data 142 may be sensed data, configuration data, or the like acquired through data gathering operations and devices that, outside of commissioning mode, normally generate data for use in baseline training and operational monitoring. However, due to the commissioning being ongoing, the local control system may decide to ignore the first acquired data 142 and not use it during baseline training or operational monitoring. Thus, at block 356, the local control system may discard the first acquired data 142 based on the indication of the OT device 67, 71 being in the commissioning mode from block 352. In some cases, the local control system may maintain the first acquired data 142 to validation commissioning operations without using the first acquired data 142 to train a model or evaluate operation relative to a baseline of the model.

Once commissioning is completed, the OT device 67, 71 may be taken out of the commissioning mode. Thus, at block 358, the local control system may receive an indication of the OT device 67, 71 exiting the commissioning mode. The commissioning mode may be exited after calibration of the OT device 67, 71. The commissioning mode may be exited after the OT device 67, 71 is confirmed to be fully connected into the industrial automation system 10. The indication may be received via a HMI associated with the OT device 67, 71. The indication of exiting the commissioning mode may be transmitted to the local control system in response to the OT device 67, 71 meeting validation thresholds of operation. The indication of exiting the commissioning mode may be transmitted to the local control system as part of the lockout, tagout operation, such as to remove the asset from being isolated from the industrial automation system once the commissioning is completed and the repair or replacement is completed.

After the local control system receives the exit indication, at block 360, the local control system may receive second acquired data 142 corresponding to the OT device 67, 71. Due to the commissioning ending, the local control system may decide to retain the second acquired data 142 and use it during baseline training or operational monitoring. Thus, at block 362, the local control system may perform additional processing operations on the second acquired data based on the second indication. The local control system may perform steady state analysis to confirm that the OT device 67, 71 is at steady state before using the second acquired data 142, such as described above relative to operations of FIGS. 8-10. Indeed, the local control system may perform, as the additional processing operations, the operations of method 240 of FIG. 8 relative to the second acquired data 142.

With the foregoing in mind, for an asset replacement, a first local control system may be disabled when a first asset is uninstalled (e.g., power removed). When a second asset is installed, replacing the first asset, a second local control system of the second asset may delay baseline training and monitoring until commissioning of the second asset is completed. The second local control system may receive an indication that the first asset was in the commissioning mode from the industrial control system 12 and may enter the commissioning mode in response to that indication. The second local control system may receive, from an input interface of the asset, an indication that the commissioning mode has been exited. The new local control system may determine commissioning is completed based on the indication and, once completed, may initiate baseline training and monitoring based on acquired data 142.

Although method 350 is described above as being performed by the local control system, it should be understood at the operations of blocks 352-362 may be performed by the industrial control system 12 and/or by another device. It should also be understood that operations of the method 350 may be performed in conjunction or in the place of operator deletion operations. For example, the local control system may associate the acquired data 142 received during the commissioning into a separate dataset and generate an alert comprising an indication whether to approve use the dataset for model training and baseline generation or not. In response to receiving a signal indicating approval via an input device in response to the alert, the local control system may discard the dataset and not use it for model training and baseline generation. In some cases, this commissioning mode (e.g., indication of commissioning mode discussed at least with block 352) may be used when isolating the OT device 67, 71 for maintenance. The commissioning mode may be entered after performing some amount of normal operation which may include some device model training. The local control system may receive an indication of the device commissioning mode after receiving acquired data at blocks 244, 282, 322, or the like. Thus, the local control system may receive additional data acquired at a later time than earlier received acquired data and may determine to discard the additional data (e.g., block 356) based on receiving the indication at block 352 of the commissioning mode.

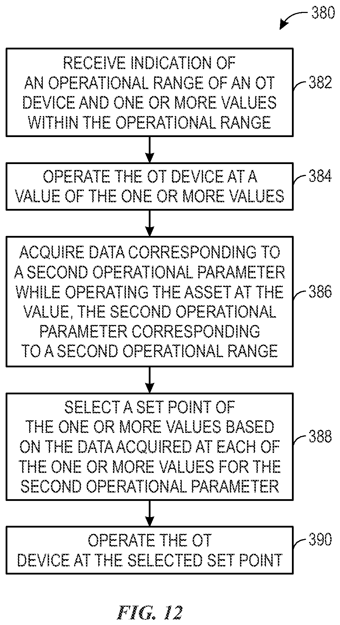

Keeping the foregoing in mind, the local control system and/or the industrial control system 12 may use the acquired data 142 and the process states 212 to determine, over time, relatively more desirable operational set points and control or make recommendations to adjust operation according to these determinations. The acquired data 142 may include two different classes of acquired data 142-a first class of acquired data 142 used to identify a respective process state implemented by an asset at a first time and a second class of acquired data 142 indicative of an efficiency of output of the asset at the first time. The local control system may use the first class of acquired data 142 used to identify a respective process state implemented by an asset at a first time and may associate the second class of acquired data 142 with the identified process state 212. Over time, the local control system may analyze the set of second class of acquired data 142 for one or more process states 212 to determine which process state 212 yielded a more desirable output (e.g., local maximum, local minimum) and flag that process state 212 as the target process state 212. The local control system may change set points of the asset to drive the asset into the target process state 212 more often. For example, although the local control system may be unable to change a type of load moved by an asset, the local control system may change a speed used to move that type of load based this analysis of the set of second class of acquired data 142. Similar may be said of the industrial control system 12, however the industrial control system 12 may analyze of the set of second class of acquired data 142 relative to data acquired associated with operation of a sub-system and thus changes or made by the industrial control system 12 may relate to one or more assets of the sub-system. These and other operations are discussed relative to FIG. 12.

FIG. 12 is a flow chart of an operational throughput method 380 used by a local control system of an asset to identify a recommended set point based on an analysis of OT device's performance while incremented through setpoints (e.g., one or more values) of its operational range (i.e., operations of 384). Although the following description of the method 380 is described as being performed by the local control system (e.g., processor 44) of a respective OT device 67, 71, it should be understood that the MPC system 140 may be deployed to the local control system to facilitate or enable performance of some or all of the operations described herein. Indeed, the industrial control system 12 may perform similar operations to identify recommended operations to be implemented via a sub-system based on the operation of one or more of the assets of the sub-system. In addition, although operations of the method 380 are described in particular order, it should be understood that the operations of the method 380 may be performed in any suitable order.

The method 380 may enable an OT device, via its local control system, to detect its own optimal operational set point based on acquired data associated with its operation at different possible set points and its collection of process states defining the different possible set points. Indeed, the local control system may identify a recommended set point based on an analysis of the OT device past and/or current performance while incremented through setpoints (e.g., one or more values) of its operational range (e.g., operations of block 384) and adjust operation based on the recommended set point (e.g., operations of block 390).

To elaborate, at block 382, the local control system may receive an indication of a first operational range of the OT device 67, 71 and one or more values within the first operational range. The one or more values within the first operational range may correspond to different process states, such as one or more application speed values (e.g., operation parameters 214) of the operational range A-1 to B+1 of FIG. 7. Any suitable operational range of any suitable operational parameter characterizing operation of the asset in the different process states 212 may be used. At block 384, the local control system may operate the OT device 67, 71 at a value of the one or more values from block 382. Doing so may operate the OT device 67, 71 into the different process states 212. At block 386, the local control system may acquire data while operating the asset at the respective values (e.g., at block 384). The acquired data may include data generated by a sensor during a sensing operation. The sensor may be any suitable sensor used in industrial automation systems, for example pressure sensors, voltage sensors, current sensors, temperature sensors, motion sensors, image sensors (e.g., cameras), infrared sensors, audio sensors, or the like. By analyzing acquired data obtained while the OT device 67, 71 is operated in one or more of the different process states (e.g., each of the different process states indicated via the first operational range), the local control system may build a record of a relationship between process state and acquired data that may be used to evaluate efficiency of the OT device 67, 71 when operated in the different process states. Some responses may be more preferred to other responses among the various process states, such as when a respective process state causes the OT device 67, 71 to consume less power, to degrade less, to operate at a lower temperature, or the like. Thus, by comparing the data acquired at block 386 to threshold or other operational guidelines, the local control system may select which of the process states, and thus select set points corresponding to the selected process states, to operate the OT device 67, 71.

In some cases, a first subset of acquired data is used to determine whether the OT device 67, 71 is operated at steady state while in the process state from block 384. Once the local control system determines the OT device 67, 71 is in steady state, the local control system may associate a second subset of acquired data with the OT device 67, 71 and that process state. Over time, the local control system is able to build a representation of the behavior of the OT device 67, 71, in steady state, across the different process states. Based on the representation, the local control system can evaluate efficiencies of the OT device 67, 71 among the different process states.

At block 388, the local control system may select a set point of the one or more values based on the data acquired at each of the one or more values for the second operational parameter. The selected set point may correspond to one or more operational parameters found desirable among the range of possible set points. For example, the local control system may track throughput of the OT device 67, 71 over time based on a plurality of acquired data sensed by one or more sensors. Throughput may be identified based on comparing an operational parameter (e.g., speed, power supplied) of the industrial asset to an output from the industrial asset (e.g., widgets produced, operating temperature). The local control system may determine a set point adjustment based on comparing the tracked throughput with one or more thresholds defining a target throughput (e.g., desired throughput). Indeed, the local control system may compare the data acquired at each of the one or more values of the first and second operational parameters to thresholds or other indications of desirable OT device 67, 71 operation (e.g., temperature maintained below a temperature threshold, rotations per minute (RPM) maintained greater than an RPM threshold, or the like). Sometimes the local control system processes the acquired data of block 386 to identify a local minimum or maximum. Once identified, the local control system may set a corresponding operation to the identified value as the selected set point.

At block 390, the local control system may operate the OT device 67, 71 at the selected set point. The local control system may implement the recommended set point and/or generate a work order to instruct operation according to the recommended set point. In some cases, the recommended set point may be transmitted to the cloud or another computing system for further processing and validation prior to operating the OT device at the selected set point.

By the local control system identifying relatively more ideal settings for its corresponding OT device 67, 71 via the method 380, computing resources may be conserved by enabling the determination to occur locally as opposed to spending bandwidth to transmit diagnostic data to the industrial control system 12 and/or through the cloud for further analysis. Furthermore, the local control system adjusting the configuration of the OT device 67, 71 over time (e.g., as process intricacies change with degradation over time) may reduce operator error and help improve overall process output by enabling more responsive adjustments to changes to occur.

Although the method 380 is described above as being performed by the local control system, it should be understood at the operations of blocks 382-390 may be performed by the industrial control system 12 and/or by another device. Indeed, the industrial control system 12 may monitor one or more parameters of one or more OT devices 67, 71 to determine a throughput of a portion of the system and determine setpoints based on the determined throughput. Indeed, if this representation of the OT device 67, 71 is shared beyond the "four walls" of the OT device 67, 71 (e.g., is transmitted to another control system or the industrial control system 12, the off-premise computing device 76, the on-premise computing device 74), representations of multiple OT device 67, 71 may be aggregated and used to determine at a higher-level overall system or unit efficiencies. The higher-level overall system or unit efficiencies may be used by the industrial control system 12, the off-premise computing device 76, and/or the on-premise computing device 74 to recommend set points for more than one OT device 67, 71. The higher-level view provided by the industrial control system 12, the off-premise computing device 76, and/or the on-premise computing device 74 may enable analysis relative to tradeoffs between various OT device operations. For example, running one OT device 67, 71 in a higher-than-desired (e.g., exceeding a threshold) temperature or RPM may be desired from an overall system perspective once that process state is identified as permitting a set of other OT devices 67, 71 to run at a lower power consumption that yields greater system conservations of power.

In some cases, the industrial control system 12 may record each occurrence that respective OT devices 67, 71 and/or a sub-system operated differently relative to the normal operation indicated via the model of baseline. When recording the instances, the industrial control system 12 may also record a timestamp of the occurrence. The recorded occurrences and timestamps may be tracked as counts over time to predict a future maintenance condition and/or end-of-life condition. For example, the industrial control system 12 may correlate a total count of occurrences for a respective OT device 67, 71 to a trend of nearing an end-of-life condition based on how differently from the baseline operation the various occurrences were. The industrial control system 12 may correlate a time between respective timestamps of the respective occurrences to a future maintenance condition and/or end-of-life condition. For example, the industrial control system 12 may predict an end-of-life condition based on a time between the respective timestamps reducing over time.

Keeping the foregoing in mind, an edge case of a mover may occur when the mover is accelerating from a speed A to a speed B at a rate change that may be detected as steady state and correspond to different process states. When a local control system is building a model for two process states, the local control system may identify additional acquired data that provides suitable context to distinguish between the two process states in the edge case. Continuing with the mover example, the local control system may associate a first position command causing the mover to be in speed A with a first process state and may associate a second position command causing the mover to be in speed B with a second process state, thereby resolving ambiguity in one type of acquired data through cross-reference to a second type of acquired data. In some systems, the local control system may flag the edge cases for operator identification. In some systems, the local control system may exclude the edge cases from automated baseline training and monitoring and may automatically route the acquired data to an operator interface for further processing or analysis. It is noted that operator labeling of process states during training may be used for each process state (e.g., other process states in addition to the edge cases) in some systems.

As also described herein, these operations may be deployed as part of a containerized application (e.g., container-based MPC system 140 of FIG. 5), which may be hosted in a cloud-computing environment. Indeed, an industrial automation system 10 may include a container orchestration system 24 associated with the operational technology (OT) network. The container orchestration system may work in tandem with an informational technology (IT) network and/or industrial control systems 12 to control, monitor, and otherwise manage devices of the industrial automation system 10. In this way, the container orchestration system 24 may aid collecting and analyzing data from OT devices 67, 71. Containers include packages of software that may include various elements needed to run in one or more software environments. As a result, containers may be deployed as individual software modules that perform specific operations or functions on the data provided to the respective container. Deploying a container closer to a data source may enable more direct, unprocessed access to data from the data source, which may improve a quality of results being produced by the operations of the containers-such as an accuracy of a prediction made by the container. When the container is done performing the desired operation, it may be spun down or terminated to free up previously consume computing resources. Furthermore, the MPC system 140 may train the device model a threshold number of training iterations before the device model corresponds to a "baseline" indication. The MPC system 140 may increment a training count indication of the device model after each training of that device model. The threshold number of training iterations and the training count indication may be compared to determine whether the device model has undergone a threshold number of training operations.

Device models described herein may correspond to an asset, drive associated with controlling the asset, or the like. Indeed, the asset may move material physically during normal operation based on operations controlled by a drive, such as a variable speed drive. The operations of the asset and of the drive may vary based on the material physically moved by the asset (e.g., according to process states), and thus either one and/or both may be device modelled using systems and methods described herein.

Systems and methods described herein may use containers and/or may implement improved machine learning operations capable of being applied to continuous process state device operation without use of a process state identification data from a control system. As described herein, training time to identify a baseline operation of the asset may reduce since respective process states are individually trained, which may lead to the overall training process being less disruptive to the process, being relatively more accurate in its prediction ability, among other improvements. The systems and methods described herein may use acquired data to identify a process state of the asset based on the actual operation of the asset, as opposed to process state identification data from a control system. For example, sensed data associated with operations of the asset may be used to identify a process state from multiple process states, which may be used to determine which device model of multiple device models may be referenced for a specific operational parameter. Indeed, with the identified process state, the systems and methods also may switch between device models and training or baseline operational modes based on the identified process state and an operational parameter. Training and classification operations may similarly access a same hierarchical index for the asset, enabling a more readily implemented machine learning program that enables the more frequent types of loads and operations to be trained faster in situ without having to disrupt the process to obtain the baseline. Furthermore, by deploying one or more of the systems and methods in association with programs operated within containers, the industrial automation system may better manage computing resources. Indeed, by deploying non-perpetual containers that terminate based on time or data acquisition parameters, computing resources may be deployed more efficiently in the industrial automation system as computing resources may not be tied up in otherwise inactive or unused data acquisition operations. Other benefits are described and/or suggested herein. Accordingly, use of the disclosed techniques may improve product quality, process quality, and efficiency within the industrial automation system.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A system comprising:
an industrial control system; and
an industrial asset communicatively coupled to the industrial control system via a local control system, wherein the industrial asset comprises the local control system that is configured to:
receive, from the industrial control system, first data corresponding to an operation of the industrial asset to occur between a first time and a second time;
receive, from one or more sensors, second data acquired between the first time and the second time;
determine that the industrial asset is operating in a steady state based on the second data;
determine a process state from a plurality of process states based on the first data;
access, from memory of the industrial asset, a baselined device model of a plurality of device models based on the process state and the second data, wherein the baselined device model is configured to indicate an expected operation of the industrial asset while operated in the process state at an operational parameter corresponding to the second data;
in response to the industrial asset operating in the steady state, determine a difference between the expected operation and a current operation, wherein the current operation is indicated based on the first data, the second data, or any combination thereof; and
generate one or more control signals based on the difference.

2. The system of claim 1, at least one of:
wherein the local control system is configured to send a work order to the industrial control system based on the difference between the expected operation and the current operation;
wherein the local control system is configured to:
determine a set point based on the difference;
transmit an indication of the set point to the industrial control system; and
generate the one or more control signals based on the set point; and
wherein the local control system is configured to:
receive, from the one or more sensors, third data acquired at a third time after the second time;
receive, from human-machine interface of the industrial asset, an indication that the industrial asset was in a commissioning mode at a fourth time; and
discard the third data based on the indication.

3. The system of claim 1 or 2, wherein the local control system is configured to:
generate the baselined device model before the first time and the second time at least in part by:
receiving, from the industrial control system, third data comprising a configuration to be applied to the industrial asset at least before a third time;
receiving, from the one or more sensors, fourth data acquired between the third time and a fourth time;
determining that the industrial asset is operating in the steady state based on the fourth data;
determining the process state based on the third data;
accessing, from the memory, a training device model of the plurality of device models based on the process state and the fourth data, wherein the training device model comprises an indication of the expected operation of the industrial asset;
adjusting the indication of the expected operation of the industrial asset based on the fourth data;
determining that a threshold amount of data has been used to adjust the indication of the expected operation of the industrial asset; and
writing, to the memory as the baselined device model, the training device model having been trained on the threshold amount of data.

4. The system of claim 3, wherein the first data comprises a motion profile of the industrial asset.

5. The system of claim 3 or 4, wherein the local control system is configured to access, from the memory, the training device model of the plurality of device models based on the process state and the fourth data at least in part by:
identifying the process state from the plurality of process states based on using the third data to identify the process state;
identifying the training device model from the plurality of device models associated with the process state based on determining which respective operational range of a plurality of operational ranges that the fourth data corresponds; and
accessing, from a hierarchical index stored in the memory, the training device model corresponding to the process state.

6. The system of claim 4 or 5, wherein the first data comprises a device configuration of the industrial asset.

7. The system of one of claims 1 to 6, wherein the local control system is configured to:
determine a throughput of the industrial asset based on comparing an operational parameter of the industrial asset to an output from the industrial asset;
determine a set point adjustment based on comparing the throughput with a threshold corresponding to a target throughput; and
send an indication of the set point adjustment to the industrial control system configured to generate a work order based on the set point adjustment.

8. The system of one of claims 1 to 7, wherein the local control system is configured to:
receive, from the one or more sensors, third data acquired at a third time after the second time;
determine that the industrial asset is not in steady state at the third time based on the third data; and
discard at least some of the third data based on determining that the industrial asset is not in steady state.

9. A method, comprising
receiving, via a local control system of an industrial asset from an industrial control system configured to communicate with the local control system to control the industrial asset, first data corresponding to an operation to operate the industrial asset according to at a first time;
receiving, via the local control system from a first sensor of the industrial asset, second data acquired at the first time;
determining, via the local control system, that the industrial asset is operating in a steady state based on the second data; and
in response to determining that the industrial asset is operating in steady state based on the second data:
determining, via the local control system, a process state from a plurality of process states based on the first data;
reading, via the local control system from memory, a baselined device model of a plurality of device models based on the process state and the second data, wherein the baselined device model is configured to indicate an expected operation of the industrial asset while the local control system operates the industrial asset in the process state at the second data;
determining, via the local control system, a difference between the expected operation and a current operation, wherein the current operation is configured to be indicated by at least some of the first data, the second data, third data acquired by a second sensor, or any combination thereof; and
generating, via the local control system, one or more control signals based on the difference.

10. The method of claim 9, comprising:
receiving, via the local control system, fourth data corresponding to an operation to operate the industrial asset according to at a second time after the first time;
receiving, via the local control system from the first sensor, fifth data acquired at the second time;
determining, via the local control system, that the industrial asset is not operating in the steady state based on the fifth data; and
in response to determining that the industrial asset is not operating in steady state based on the second data, generating, via the local control system, one or more control signals based on the fourth data independent of the plurality of device models.

11. The method of claim 9 or 10, at least one of:
comprising:
receiving, via the local control system from the industrial control system, an instruction to proceed with adjusting the current operation of the industrial asset based on the difference between the expected operation and the current operation; and
based on the validation, generating, via the local control system, the one or more control signals; and
wherein receiving, via the local control system, the first data from the industrial control system comprises receiving a motion profile to be implemented via the industrial asset at the first time.

12. A non-transitory, tangible, computer-readable medium storing instructions that, when executed by processing circuitry, cause a local control system of an industrial asset to perform operations comprising:
receiving first data from an industrial control system corresponding to an operation of the industrial asset according at a first time;
receiving second data from a first sensor of the industrial asset, wherein the second data was acquired by the first sensor at the first time;
determining, via the local control system, that the industrial asset is not operating in a steady state based on the second data, that the industrial asset is operating in a commissioning mode, or both; and
in response to determining that the industrial asset is not operating in steady state or is operating in a commissioning mode, generating one or more control signals to operate the industrial asset without accessing a device model.

13. The non-transitory, tangible, computer-readable medium of claim 12, wherein the instructions cause the local control system to perform operations comprising:
receiving third data from the industrial control system, wherein the third data corresponds to an operation to operate the industrial asset according to at a second time;
receiving fourth data from the first sensor, wherein the fourth data was acquired at the second time;
determining that the industrial asset is operating in a steady state based on the fourth data;
in response to determining that the industrial asset is operating in the steady state when the fourth data was acquired, determining, via the local control system, a process state from a plurality of process states based on the third data;
reading a baselined device model of a plurality of device models from a memory based on the process state and the second data, wherein the baselined device model is configured to indicate an expected operation of the industrial asset while the local control system operates the industrial asset in the process state at the fourth data;
determining, via the local control system, a difference between the expected operation and a current operation, wherein the current operation is configured to be indicated by at least some of the first data, the second data, fifth data acquired by a second sensor, or any combination thereof; and
generating one or more control signals based on the difference.

14. The non-transitory, tangible, computer-readable medium of claim 12 or 13, at least one of:
wherein the first data comprises configuration data of the industrial asset;
wherein receiving the first data from the industrial control system comprises receiving a motion profile; and
wherein receiving the second data from the first sensor comprises receiving an indication of a speed of the industrial asset acquired at the first time.

15. The non-transitory, tangible, computer-readable medium of one of claims 12 to 14, wherein the instructions cause the local control system to perform operations comprising:
determining a throughput of the industrial asset based on comparing an operational parameter of the industrial asset to an output from the industrial asset;
determining a set point adjustment based on comparing the throughput with a threshold corresponding to a target throughput; and
generating one or more control signals to implement the set point adjustment.
